(19) Europäisches Patentamt
European Patent Office
Office européen des brevets

(11) EP 4 571 918 A1

(12) **EUROPEAN PATENT APPLICATION**
published in accordance with Art. 153(4) EPC

(43) Date of publication:
**18.06.2025 Bulletin 2025/25**

(21) Application number: **23851401.2**

(22) Date of filing: **27.06.2023**

(51) International Patent Classification (IPC):
***H01M 10/0567*** *(2010.01)* ***H01M 10/0525*** *(2010.01)*

(52) Cooperative Patent Classification (CPC):
Y02E 60/10; Y02P 70/50

(86) International application number:
**PCT/CN2023/102546**

(87) International publication number:
**WO 2024/032174 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.08.2022 CN 202210951535**

(71) Applicant: **Shenzhen Capchem Technology Co., Ltd**
**Shenzhen, Guangdong 518118 (CN)**

(72) Inventors:
- **QIAN, Yunxian**
  **Shenzhen, Guangdong 518118 (CN)**
- **HU, Shiguang**
  **Shenzhen, Guangdong 518118 (CN)**
- **LI, Hongmei**
  **Shenzhen, Guangdong 518118 (CN)**
- **XIANG, Xiaoxia**
  **Shenzhen, Guangdong 518118 (CN)**

(74) Representative: **Herrero & Asociados, S.L.**
**Edificio Aqua - Agustín de Foxá, 4-10**
**28036 Madrid (ES)**

Remarks:
The applicant has filed a text with which it is intended to bring the translation into conformity with the application as filed (Art. 14(2) EPC).

(54) **LITHIUM ION BATTERY**

(57) In order to solve the problems of capacity attenuation and inadequate dynamic performance of the existing high-voltage LCO battery, the application provides a lithium-ion battery, including a positive electrode, a negative electrode and a non-aqueous electrolyte. The positive electrode includes a positive electrode current collector and a positive electrode material layer arranged on the positive electrode current collector, and the positive electrode material layer includes a positive electrode active material containing a lithium cobalt oxide, and the positive electrode has a resistivity less than or equal to 1000 Ω·cm; the non-aqueous electrolyte includes a non-aqueous organic solvent, a lithium salt and an additive, the additive includes a compound represented by structural formula 1:

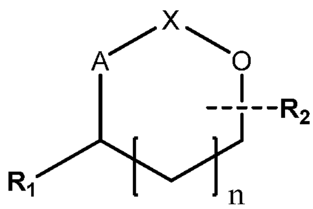

;

the lithium-ion battery meets the following requirements: $0.05 \le m*d/f \le 5$, and $10 \le d \le 40$, $3 \le f \le 30$, $0.01 \le m \le 3$. The lithium-ion battery provided by the present application effectively ensures the ionic conductivity and electronic conductivity of the positive electrode, as well as good dynamic and cycle performances without compromising energy density.

EP 4 571 918 A1

## Description

### Technical field

The present application belongs to the technical field of energy storage devices, and particularly relates to a lithium-ion battery.

### Background

With the rapid development of portable electronic devices such as mobile phones, laptop computers, digital cameras, and so on, the energy market is seeing an increase in demand for renewable, high-energy, long-life batteries. The lithium cobalt oxide (LCO) battery has dominated the lithium-ion secondary battery industry due to its simple production process, high energy density, and strong cycle performance. However, with the rapid development of smart phones, the energy density of conventional lithium cobalt oxide products has gradually failed to satisfy demand, necessitating urgent efforts to improve the energy density of lithium cobalt oxide materials. The industrialization of high-voltage (≥4.45V)LCO has elevated LCO to a new development platform. Currently, the updated 4.35V and 4.4V LCO batteries, as well as the adapted non-aqueous electrolyte, have matured. However, there are certain remaining hurdles in the technology of high-voltage LCO batteries of 4.45V and higher. On the one hand, an upper charging voltage more than 4.45V exceeds the electrochemical window range of standard non-aqueous electrolytes, and the non-aqueous electrolyte will be on the surface of LCO materials. On the other hand, LCO materials have severe Co dissolution problems, particularly at high temperatures. Co ion dissolution accelerates the phase transition of positive electrode materials, and causes internal stress to build up. This leads to the amorphization of materials and structural collapse and fracture, which seriously affecting the adhesive force between the positive electrode active material and current collector or between positive electrode active materials, resulting in powder falling off the positive electrode plate, which leads to the decline of battery capacity and poor dynamic performance.

In view of the above characteristics of LCO battery, very high requirements are put forward for battery electrode plate technology and non-aqueous electrolyte. At present, the technology and process of high-voltage LCO non-aqueous electrolyte on the market are not mature enough. Therefore, the process of non-aqueous electrolyte and electrode plate has become an important bottleneck restricting the practical application of high-voltage LCO battery at present. Developing an appropriate non-aqueous electrolyte is an inevitable way for its industrial development. It is a common challenge in the industry to achieve a battery with guaranteed dynamic performance and other electrochemical performance through well-thought design of positive electrode plate.

### Summary of the invention

In order to solve the problems of capacity attenuation and inadequate dynamic performance of the existing high-voltage LCO battery, the application provides a lithium-ion battery.

The technical solutions adopted by the application to solve the technical problems are as follows.

The present application provides a lithium-ion battery, including a positive electrode, a negative electrode and a non-aqueous electrolyte, and the positive electrode includes a positive electrode current collector and a positive electrode material layer arranged on the positive electrode current collector, and the positive electrode material layer includes a positive electrode active material containing a lithium cobalt oxide, and the positive electrode has a resistivity less than or equal to 1000 Ω·cm; the non-aqueous electrolyte includes a non-aqueous organic solvent, a lithium salt and an additive, and the additive includes a compound represented by structural formula 1:

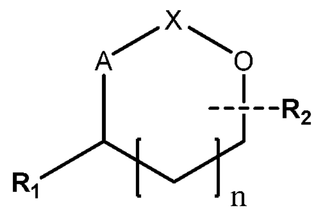

Structural formula 1

n is 0 or 1, A is selected from C or O, X is selected from

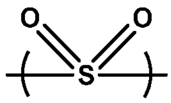 or 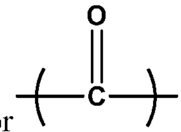,

$R_1$ and $R_2$ are independently selected from H,

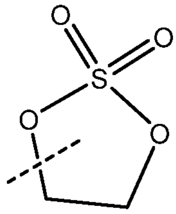, 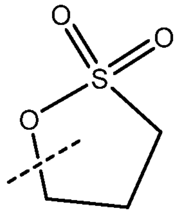, 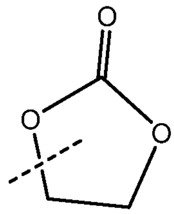,

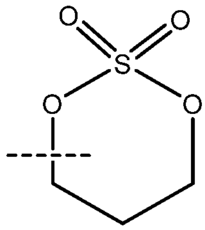 or 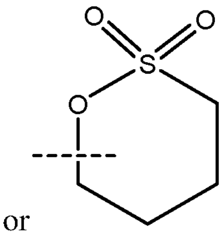,

$R_1$ and $R_2$ are not selected from H at the same time, and X, $R_1$ and $R_2$ contain at least one sulfur atom;;
the lithium-ion battery meets the following requirements:

$$0.05 \leq m*d/f \leq 5, \text{ and } 10 \leq d \leq 40,\ 3 \leq f \leq 30,\ 0.01 \leq m \leq 3;$$

d is a single-sided surface density of the positive electrode material layer, in mg/cm$^2$;
f is an adhesive force between the positive electrode material layer and the positive electrode current collector, in N/m; and
m is a percentage mass content of the compound represented by structural formula 1 in the non-aqueous electrolyte, in %.

Alternatively, the lithium-ion battery meets the following requirements:

$$0.1 \leq m*d/f \leq 3.$$

Alternatively, the positive electrode has a resistivity of 30-500 $\Omega \cdot$cm.
Alternatively, the single-sided surface density (d) of the positive electrode material layer is 15-30mg/cm$^2$.
Alternatively, the adhesive force (f) between the positive electrode material layer and the positive electrode current collector is 5-20 N/m.
Alternatively, the percentage mass content (m) of the compound represented by structural formula 1 in the non-aqueous electrolyte is 0.1%-1.5%.
Alternatively, the compound represented by structural formula 1 is selected from one or more of the following compounds:

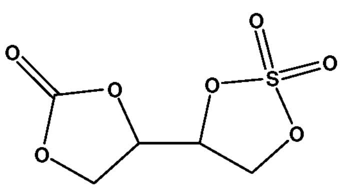
Compound 1

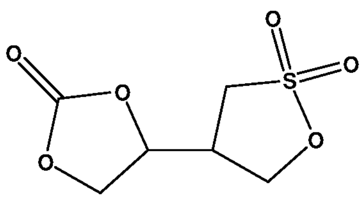
Compound 2

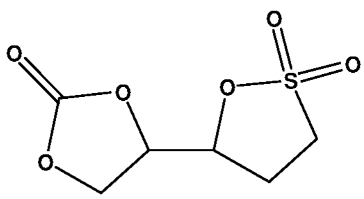
Compound 3

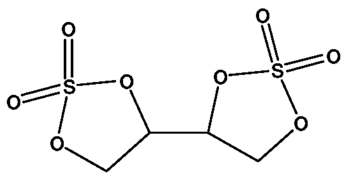

Compound 4

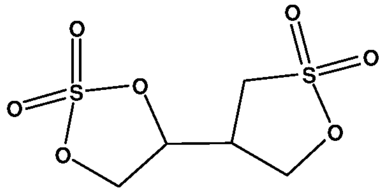

Compound 5

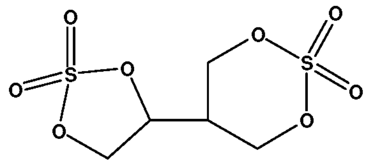

Compound 6

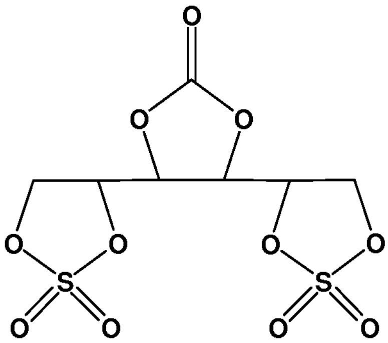

Compound 7

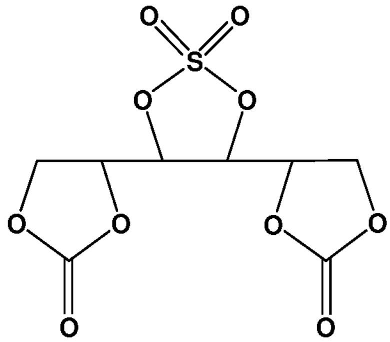

Compound 8

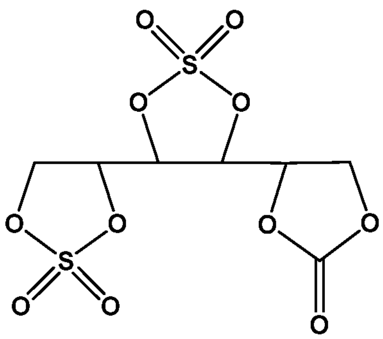

Compound 9

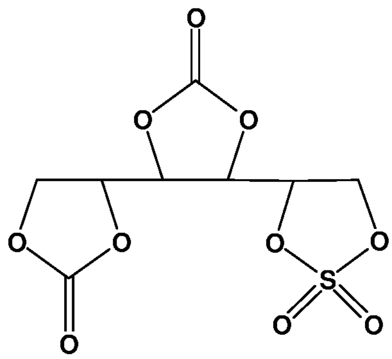

Compound 10

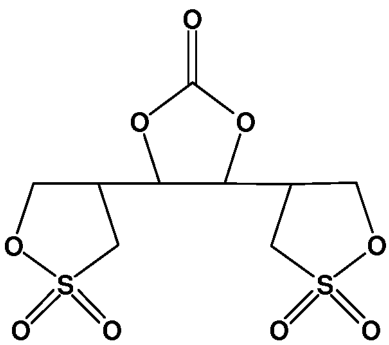

Compound 11

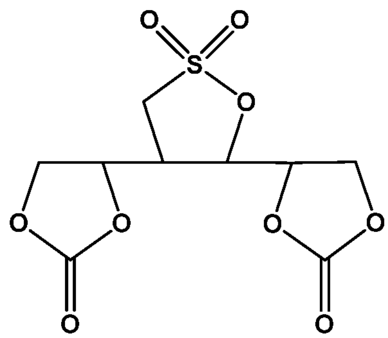

Compound 12

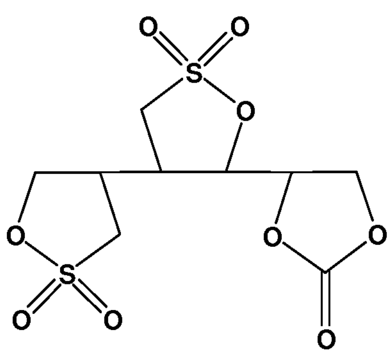

Compound 13

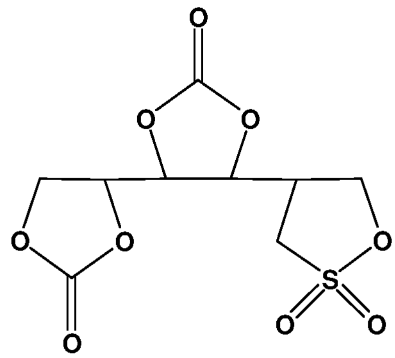

Compound 14

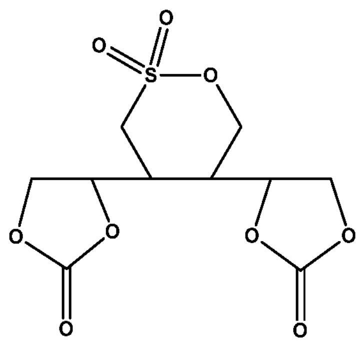

Compound 15

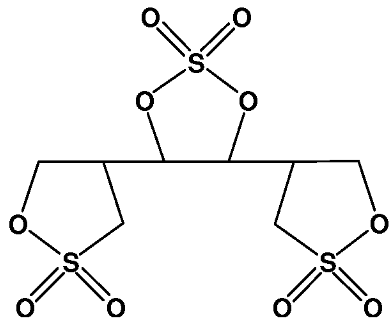

Compound 16

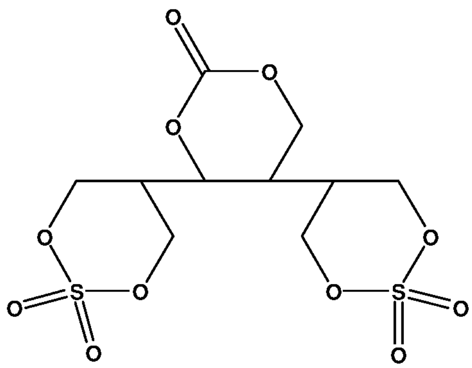

Compound 17

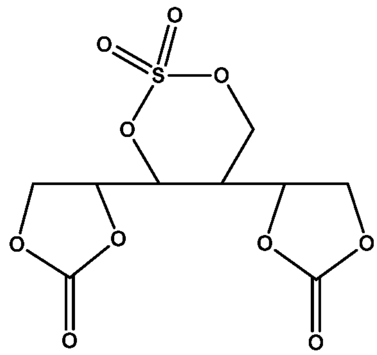

Compound 18

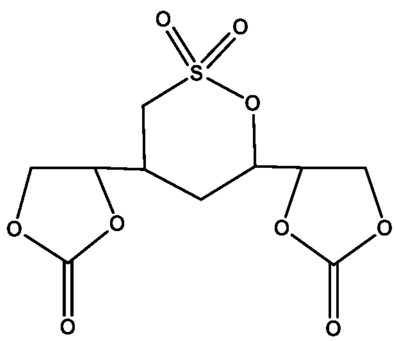

Compound 19

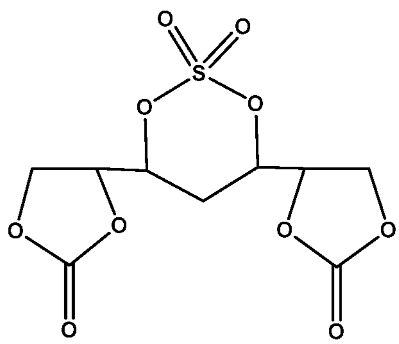

Compound 20

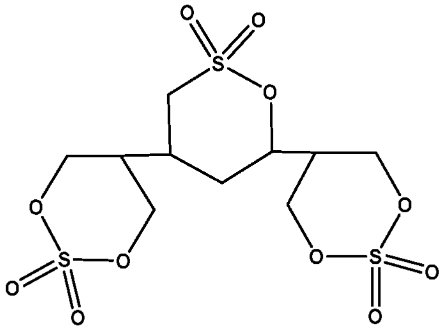

Compound 21

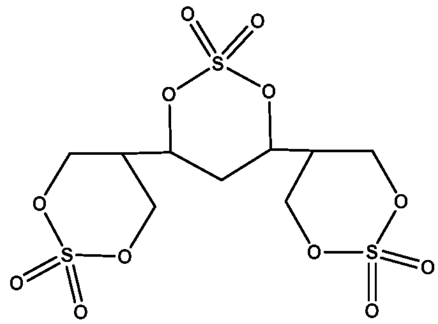

Compound 22.

Alternatively, the positive electrode material layer further includes a positive electrode binder, and the positive electrode binder includes an organic polymer with a molecular weight of 0.6-1.3 million.

Alternatively, the additive further includes at least one of cyclic sulfate compounds, sultone compounds, cyclic carbonate compounds, phosphate compounds, borate compounds and nitrile compounds;

the content of the additive is 0.01%-30% based on the total mass of the non-aqueous electrolyte being 100%.

Alternatively, the cyclic sulfate compound is at least one selected from the group consisting of ethylene sulfate, propylene sulfate, methyl ethylene sulfate,

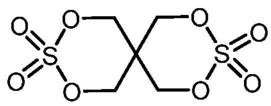

and

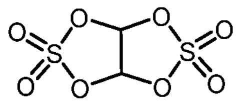

;

the sultone compound is at least one selected from the group consisting of 1,3-propane sultone, 1,4-butane sultone and 1,3- propylene sultone;

the cyclic carbonate compound is selected from at least one of vinylene carbonate, vinylethylene carbonate, methylene ethylene carbonate, fluoroethylene carbonate, trifluoromethyl ethylene carbonate, bis-fluoroethylene carbonate or a compound represented by structural formula 2,

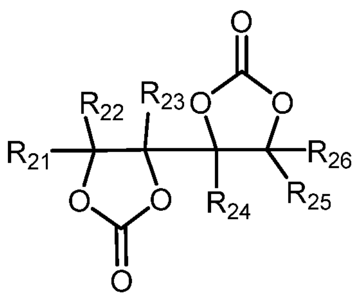

Structural formula 2

in structural formula 2, $R_{21}$, $R_{22}$, $R_{23}$, $R_{24}$, $R_{25}$ and $R_{26}$ are independently selected from one of a hydrogen atom, a halogen atom and a C1-C5 group;

the phosphate compound is selected from at least one of tri (trimethylsilane) phosphate, tri (trimethylsilane) phosphite or a compound represented by structural formula 3:

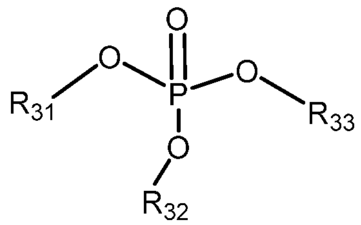

Structural formula 3

in structural formula 3, $R_{31}$, $R_{32}$ and $R_{33}$ are independently selected from a C1-C5 saturated hydrocarbon group, an unsaturated hydrocarbon group, a halogenated hydrocarbon group, $-Si(C_mH_{2m+1})_3$, m is a natural number of 1-3, and at least one of $R_{31}$, $R_{32}$ and $R_{33}$ is an unsaturated hydrocarbon group;

the borate compound is selected from at least one of tris (trimethylsilane) borate and tris (triethyl silicane) borate; and the nitrile compound is selected from one or more of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

According to the lithium-ion battery provided by the present application, lithium cobalt oxide is used as a positive electrode active material, and the compound represented by structural formula 1 is added as an additive in the non-aqueous electrolyte, so that an interface film can be formed on the surface of the positive electrode material layer. In order to address the issue of inadequate cycle performance of lithium cobalt oxide battery, the inventor(s) conducted a lot of research and found that when the single-sided surface density (d) of the positive electrode material layer, the adhesive force (f) between the positive electrode material layer and the positive electrode current collector, and the percentage mass content (m) of the compound represented by structural formula 1 in the non-aqueous electrolyte meet the condition: $0.05 \leq m*d/f \leq 5$, the positive electrode is enabled to provide a lithium-ion transmission channel with an appropriate length. It not only ensures the high energy density of the battery, but also enables the non-aqueous electrolyte to fully infiltrate the positive electrode plate and form a stable and thin interface film on the surface of the positive electrode material layer. Moreover, the adhesive force between the positive electrode material layer and the positive electrode current collector can ensure excellent electronic conductivity of the positive electrode. Thus, the liquid phase conduction resistance of lithium-ions in the porous electrode channels of the positive electrode is small, and the charge exchange resistance between lithium-ions and electrons on the surface of the positive electrode active material is small, which can effectively ensure the ionic conductivity and electronic conductivity of the positive electrode. This allows the positive electrode to have good dynamic performance, and further ensures that the battery has good dynamic performance and cycle performance without compromising energy density.

**Detailed description of preferred embodiments**

In order to make the technical problems, technical solutions and beneficial effects of the present application more clear, the application will be further explained in detail below with reference to the drawings and embodiments. It should be understood that the specific embodiments described here are only used to illustrate the application, rather than to limit the application.

The embodiment of present application provides a lithium-ion battery, including a positive electrode, a negative electrode and a non-aqueous electrolyte; the positive electrode includes a positive electrode current collector and a positive electrode material layer arranged on the positive electrode current collector, and the positive electrode material layer includes a positive electrode active material containing a lithium cobalt oxide, and the positive electrode has a resistivity less than or equal to 1000 $\Omega \cdot cm$; the non-aqueous electrolyte includes a non-aqueous organic solvent, a lithium salt and an additive, the additive includes a compound represented by structural formula 1:

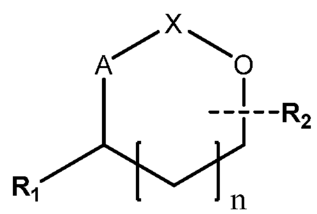

Structural formula 1

n is 0 or 1, A is selected from C or O, X is selected from

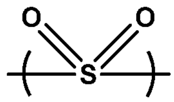 or 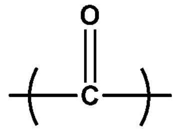 ,

$R_1$ and $R_2$ are independently selected from H,

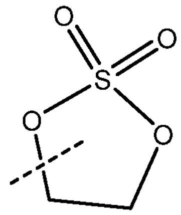 , 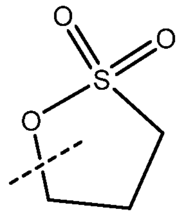 , 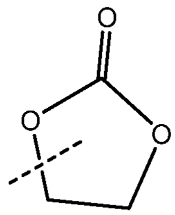 ,

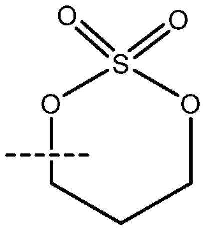 or 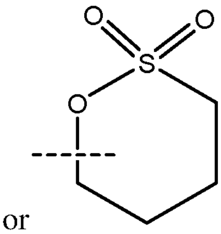 ,

$R_1$ and $R_2$ are not selected from H at the same time, and X, $R_1$ and $R_2$ contain at least one sulfur atom;
the lithium-ion battery meets the following requirements:

$$0.05 \leq m*d/f \leq 5, \text{ and } 10 \leq d \leq 40,\ 3 \leq f \leq 30,\ 0.01 \leq m \leq 3;$$

d is a single-sided surface density of the positive electrode material layer, in $mg/cm^2$;
f is an adhesive force between the positive electrode material layer and the positive electrode current collector, in N/m; and
m is a percentage mass content of the compound represented by structural formula 1 in the non-aqueous electrolyte, in %.

Lithium cobalt oxide is adopted as a positive electrode active material for the lithium-ion battery, and the compound represented by structural formula 1 is added as an additive in the non-aqueous electrolyte, so that an interface film can be formed on the surface of the positive electrode material layer. In order to address the issue of inadequate cycle performance of lithium cobalt oxide battery, the inventor(s) conducted a lot of research and found that when the single-sided surface density (d) of the positive electrode material layer, the adhesive force (f) between the positive electrode material layer and the positive electrode current collector, and the percentage mass content (m) of the compound represented by structural formula 1 in the non-aqueous electrolyte meet the condition: $0.05 \leq m*d/f \leq 5$, the positive electrode is enabled to provide a lithium-ion transmission channel with an appropriate length. It not only ensures the high energy density of the battery, but also enables the non-aqueous electrolyte to fully infiltrate the positive electrode plate and form a stable and thin interface film on the surface of the positive electrode material layer. Moreover, the adhesive force between the positive electrode material layer and the positive electrode current collector can ensure excellent electronic conductivity of the positive electrode. Thus, the liquid phase conduction resistance of lithium-ions in the porous electrode channels of the positive electrode is small, and the charge exchange resistance between lithium-ions and electrons on the surface of the positive electrode active material is small, which can effectively ensure the ionic conductivity and electronic conductivity of the positive electrode. This allows the positive electrode to have good dynamic performance, and further ensures that the battery has good dynamic performance and cycle performance without compromising energy density.

In a preferred embodiment, the lithium-ion battery meets the following requirements:

$$0.1 \leq m*d/f \leq 3.$$

If the value of m*d/f is too low, the single-sided surface density of the positive electrode material layer would be too small, or the adhesive force between the positive electrode material layer and the positive electrode current collector would be too large, or the content of the compound represented by structural formula 1 in the non-aqueous electrolyte would be less. If the value of m*d/f is too large, the single-sided surface density of the positive electrode material layer would too large, or the adhesive force between the positive electrode material layer and the positive electrode current collector would be too small, or the content of the compound represented by structural formula 1 in the non-aqueous electrolyte would be too large. Or, because of the combination effect of the above unfavorable factors, the m*d/f value can not satisfy the relational expression, the three influencing factors can not cooperate with one another, resulting in poor dynamic performance of the positive electrode, which further affects the dynamic performance of the battery.

In a specific embodiment, the resistivity of the positive electrode may be 5 Ω·cm, 10 Ω·cm, 20 Ω·cm, 30 Ω·cm, 40 Ω·cm, 50 Ω·cm, 60 Ω·cm, 80 Ω·cm, 100 Ω·cm, 150 Ω·cm, 200 Ω·cm, 250 Ω·cm, 300 Ω·cm, 400 Ω·cm, 500 Ω·cm, 600 Ω·cm, 700 Ω·cm, 800 Ω·cm, 900 Ω·cm or 1000 Ω·cm.

In a preferred embodiment, the resistivity of the positive electrode is 10 Ω·cm-1000 Ω·cm.

In a more preferred embodiment, the resistivity of the positive electrode is 30 Ω·cm-500 Ω·cm.

In a specific embodiment, the single-sided surface density (d) of the positive electrode material layer is 10 $mg/cm^2$, 13 $mg/cm^2$, 15 $mg/cm^2$, 16 $mg/cm^2$, 18 $mg/cm^2$, 21 $mg/cm^2$, 23 $mg/cm^2$, 24 $mg/cm^2$, 26 $mg/cm^2$, 27 $mg/cm^2$, 29 $mg/cm^2$, 30 $mg/cm^2$, 32 $mg/cm^2$, 33 $mg/cm^2$, 35 $mg/cm^2$, 39 $mg/cm^2$ or 40 $mg/cm^2$.

In a preferred embodiment, the single-sided surface density (d) of the positive electrode material layer is 15-30$mg/cm^2$.

The smaller the single-sided surface density of the positive electrode material layer is, the easier it is for non-aqueous electrolyte to enter the pores of the positive electrode. The smaller the resistance of lithium-ion conduction from the surface of the porous electrode of the positive electrode to the inside of the porous electrode of the positive electrode, the better the dynamic performance of the battery. Meanwhile, the decrease of single-sided surface density of the positive electrode material layer will also lead to lower energy density of the battery. And it will also affect the adhesion between the positive electrode material layer and the positive electrode current collector and the adhesion between the positive electrode active material particles. In the process of battery assembly, the risk of the positive electrode material layer falling off becomes higher, which may affect the improvement effect on the battery dynamic performance and cycle performance, and may even lead to safety accidents. The larger the single-sided surface density of the positive electrode material layer, the more unfavorable it is for the infiltration of non-aqueous electrolyte, the longer the lithium-ion transfer channel, and the worse the lithium-ion battery dynamics. Therefore, when the single-sided surface density of the positive electrode material layer falls within the above-mentioned preferred range, the dynamic performance of the battery can be better improved. meanwhile, the protective ability of the non-aqueous electrolyte of the positive electrode material layer is also better, the growth of lithium-ion liquid phase conduction impedance is slower, and the cycle performance of the battery can be further improved.

In a specific embodiment, the adhesive force (f) between the positive electrode material layer and the positive electrode current is 3 N/m, 4 N/m, 5 N/m, 7 N/m, 8 N/m, 10 N/m, 13 N/m, 15 N/m, 16 N/m, 18 N/m, 21 N/m, 23 N/m, 24 N/m, 26 N/m, 27 N/m, 29 N/m or 30N/m.

In a preferred embodiment, the adhesive force (f) between the positive electrode material layer and the positive electrode current is 5-20 N/m.

Too low adhesive force between the positive electrode material layer and the positive electrode current collector will affect the electron conduction between the positive electrode material layer and the positive electrode current collector. With the increase of the adhesive force between the positive electrode material layer and the positive electrode current collector, the conductivity of electrons reaching the positive electrode material layer through the positive electrode current collector will be better, and the speed of charge exchange between active ions and electrons on the surface of the positive electrode active material will be faster, thus the battery can have better dynamic performance. However, when the adhesive force between the positive electrode material layer and the positive electrode current collector is too strong, there is a possibility that the binder content in the positive electrode material layer is too high or the spreading area of the binder on the surface of the positive electrode active material and the positive electrode current collector is too large, which is not conducive to the electronic conduction of the positive electrode, and the dynamic performance of the battery is worse. Moreover, the effect of improving the energy density of the battery may also be affected due to the increase of binder content in the positive electrode material layer.

In a specific embodiment, the percentage mass content (m) of the compound represented by structural formula 1 in the non-aqueous electrolyte may be 0.01%, 0.02%, 0.05%, 0.08%, 0.1%, 0.2%, 0.4%, 0.5%, 0.7%, 0.9%, 1.0%, 1.1%, 1.3%, 1.5%, 1.8%, 2.0%, 2.3%, 2.7% or 3.0%.

In a preferred embodiment, the percentage mass content (m) of the compound represented by structural formula 1 in the non-aqueous electrolyte is 0.1%-1.5%.

If the percentage mass content of the compound represented by structural formula 1 in the non-aqueous electrolyte is too low, it is not conducive to the formation of a stable interface film with high ionic conductivity on the surface

of the positive electrode material layer, which causes the dissolution of Co ions in the positive electrode active material. The dissolution of Co ions intensifies the phase transition of the positive electrode material, resulting in the accumulation of internal stress, which leads to the amorphization of the material and the collapse and fracture of the structure. The pulverization and degradation of the positive electrode material will also affect the adhesion effect between the positive electrode material layer and the positive electrode current collector, resulting in the problem of powder dropping of the positive electrode, which leads to the battery capacity attenuation. If the percentage mass content of the compound represented by structural formula 1 in the non-aqueous electrolyte is too high, the interface film formed will be too thick and the battery impedance will be increased. Therefore, when the percentage mass content of the compound represented by structural formula 1 in the non-aqueous electrolyte is within the above range, it is beneficial to form a stable interface film with high ionic conductivity on the surface of the positive electrode material layer, promote the diffusion of lithium-ions, suppress the problem of Co ions in the positive electrode active material, and improve the cycle performance of the battery.

In some embodiments, the compound represented by structural formula 1 is selected from one or more of the following compounds:

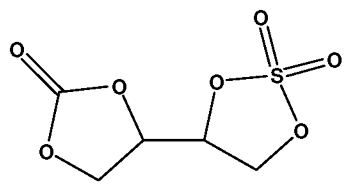

Compound 1

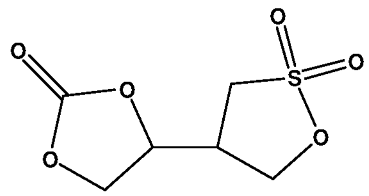

Compound 2

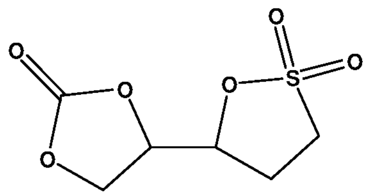

Compound 3

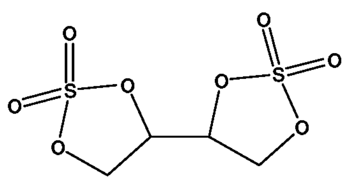

Compound 4

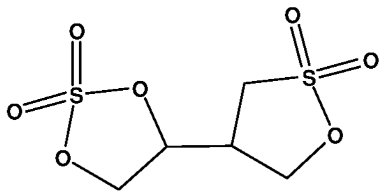

Compound 5

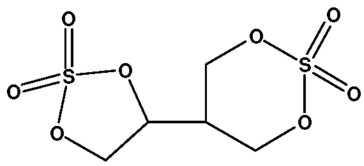

Compound 6

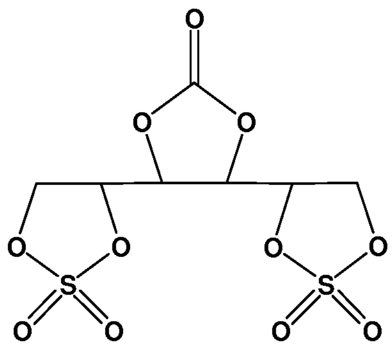

Compound 7

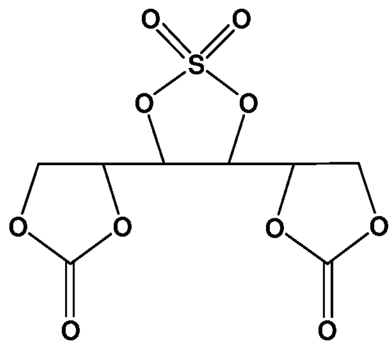

Compound 8

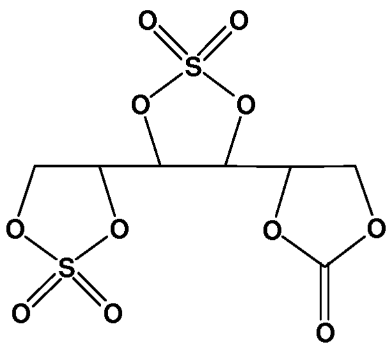

Compound 9

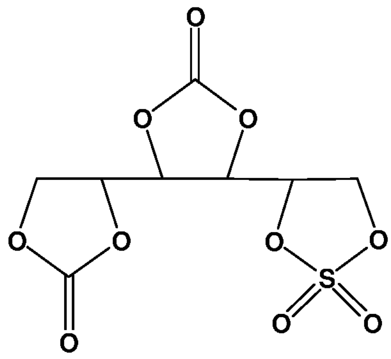

Compound 10

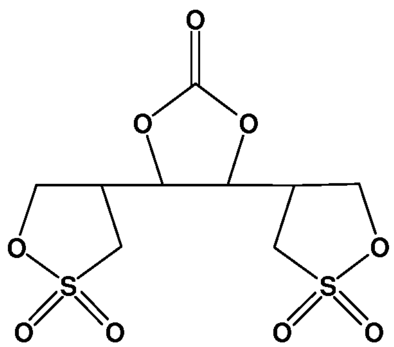

Compound 11

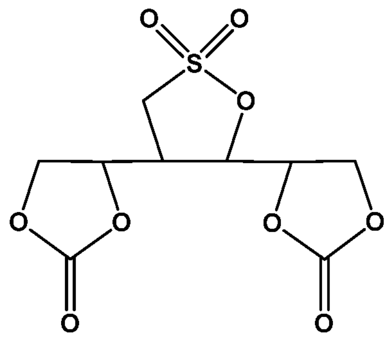

Compound 12

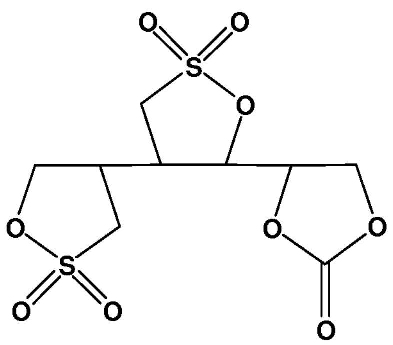

Compound 13

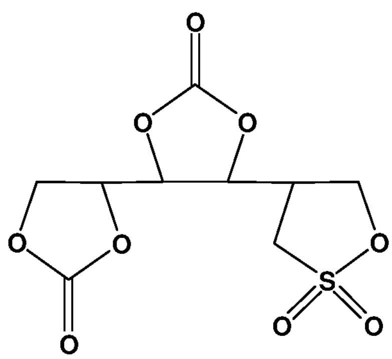

Compound 14

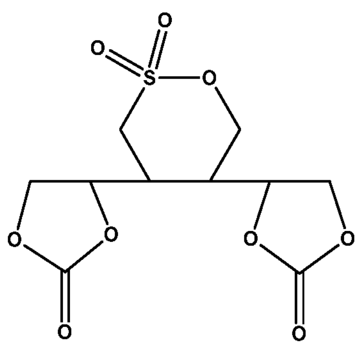

Compound 15

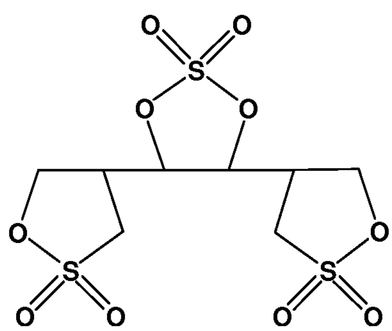

Compound 16

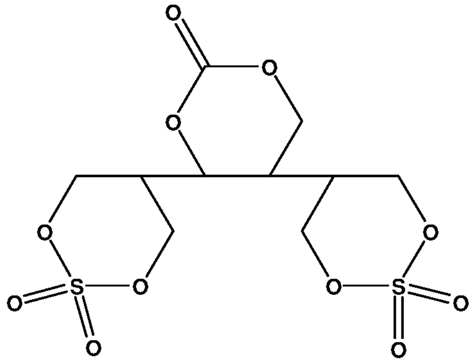

Compound 17

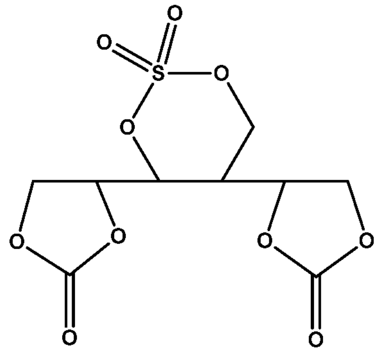

Compound 18

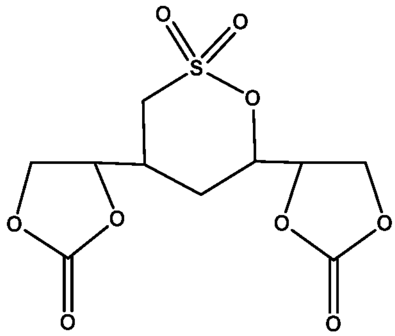

Compound 19

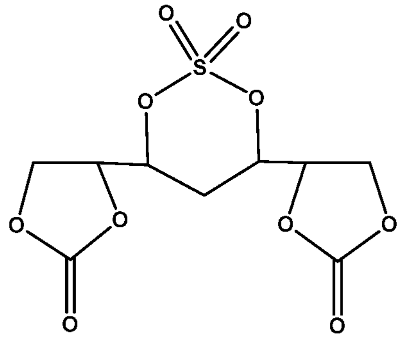

Compound 20

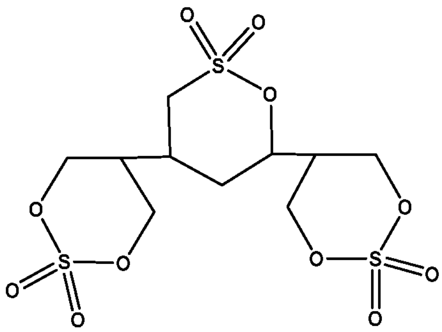

Compound 21

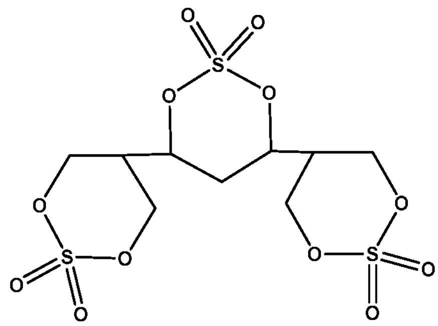

Compound 22.

It should be noted that the above are merely the preferred compounds of the present application, not the limitation of the present application.

With the structural formula of the compound represented by structural formula 1, a person skilled in the art may obtain the preparation methods of the above compounds according to the common knowledge in the chemical synthesis field. For example, compound 7 may be prepared by the following method.

Put organic solvents such as sorbitol, dimethyl carbonate, methanol alkaline catalyst potassium hydroxide and DMF into a reaction container, allow them to react for several hours under heating conditions, add a certain amount of oxalic acid to adjust the pH value to be neutral, then filter and recrystallize to obtain an intermediate product 1, and then perform esterification reaction on the intermediate product 1, carbonate, thionyl chloride and the like under high temperature conditions to obtain an intermediate product 2, and oxidize the intermediate product 2 by using an oxidant such as sodium periodate and the like to obtain a compound 7.

In some embodiments, the lithium-ion battery is a pouch battery or an ebonite battery.

In some embodiments, the positive electrode material layer further includes a positive electrode binder, and the positive electrode binder includes an organic polymer with a molecular weight of 0.6-1.3 million.

When the positive electrode binder meets the above conditions, the positive electrode material layer and the positive electrode current collector have good adhesion and dynamic performance, and the battery has excellent capacity

and cycle life.

In some embodiments, the positive electrode binder includes one or more of polyvinylidene fluoride, vinylidene fluoride copolymer, polytetrafluoroethylene, vinylidene fluoride-hexafluoropropylene copolymer, tetrafluoroethylene-hexafluoropropylene copolymer, tetrafluoroethylene-perfluoroalkyl vinyl ether copolymer, ethylene-tetrafluoroethylene copolymer, vinylidene fluoride-tetrafluoroethylene copolymer, vinylidene fluoride-trifluoroethylene copolymer, vinylidene fluoride-trichloroethylene copolymer, vinylidene fluoride-fluoroethylene copolymer, vinylidene fluoride-hexafluoropropylene-tetrafluoroethylene copolymer, and thermoplastic resins such as thermoplastic polyimide, polyethylene, polypropylene, polyethylene glycol terephthalate nnd polymethyl methacrylate, as well as acrylic resin, carboxymethyl cellulose sodium; nitrile rubber, polybutadiene, ethylene-propylene rubber, styrene-butadiene-styrene block copolymer or its hydride, ethylene-propylene-diene terpolymer, polyvinyl acetate, syndiotactic -1,2- polybutadiene, and ethylene-ethylene acetate.

In some embodiments, the positive electrode material layer also includes a positive electrode conductive agent. The positive electrode conductive agent includes one or more of conductive carbon black, conductive carbon spheres, conductive graphite, conductive carbon fiber, carbon nanotubes, graphene or reduced graphene oxide.

In some embodiments, the positive electrode current collector is selected from metal materials that can conduct electrons. Preferably, the positive electrode current collector includes one or more of Al, Ni, tin, copper and stainless steel. In a more preferred embodiment, the positive electrode current collector is selected from aluminum foil.

In some embodiments, the negative electrode includes a negative electrode material layer, which includes a negative electrode active material.

In a preferred embodiment, the negative electrode active material includes at least one of a carbon-based negative electrode, a silicon-based negative electrode, a tin-based negative electrode and a lithium negative electrode. The carbon-based negative electrode may include graphite, hard carbon, soft carbon, graphene, mesophase carbon microspheres, etc. The silicon-based negative electrode may include silicon material, silicon oxide, silicon-carbon composite material, silicon alloy material, etc. The tin-based negative electrode may include tin, tin carbon, tin oxide and tin metal compounds. The lithium negative electrode may include metallic lithium or lithium alloy. The lithium alloy may be at least one of lithium silicon alloy, lithium sodium alloy, lithium potassium alloy, lithium aluminum alloy, lithium tin alloy and lithium indium alloy.

In some embodiments, the negative electrode material layer further includes a negative electrode binder and a negative electrode conductive agent. The negative electrode active material, the negative electrode binder and the negative electrode conductive agent are blended to obtain the negative electrode material layer.

The possible ranges of the negative electrode binder and the negative electrode conductive agent are the same as those of the positive electrode binder and the positive electrode conductive agent respectively, and the details are not repeated here.

In some embodiments, the negative electrode plate further includes a negative electrode current collector, and the negative electrode material layer is formed on the surface of the negative electrode current collector.

The negative current collector is selected from metal materials that can conduct electrons. Preferably, the negative current collector includes one or more of Al, Ni, tin, copper and stainless steel. In a more preferred embodiment, the negative current collector is selected from copper foil.

In some embodiments, the lithium salt includes at least one of $LiPF_6$, LiBOB, LiDFOB, $LiPO_2F_2$, $LiBF_4$, $LiSbF_6$, $LiAsF_6$, $LiN(SO_2CF_3)_2$, $LiN(SO_2C_2F_5)_2$, $LiC(SO_2CF_3)_3$, $LiN(SO_2F)_2$, $LiClO_4$, $LiAlCl_4$, $LiCF_3SO_3$, $Li_2B_{10}Cl_{10}$, $LiSO_2F$, LiTOP (lithium oxalate phosphate), LiDODFP (lithium difluoro oxalate phosphate), LiOTFP (lithium tetrafluorooxalate phosphate) and lithium salts of lower aliphatic carboxylic acids.

In some embodiments, the concentration of the lithium salt in the non-aqueous electrolyte is 0.1mol/L-8mol/L. In a preferred embodiment, the concentration of the lithium salt in the non-aqueous electrolyte is 0.5mol/L-2.5mol/L. Specifically, the concentration of the lithium salt in the non-aqueous electrolyte may be 0.5mol/L, 1mol/L, 1.5mol/L, 2mol/L and 2.5mol/L.

In some embodiments, the non-aqueous organic solvent includes one or more of ether solvent, nitrile solvent, carbonate solvent and carboxylic ester solvent.

In some embodiments, the ether solvent includes cyclic ether or chain ether, preferably chain ether with 3-10 carbon atoms and cyclic ether with 3-6 carbon atoms, and the specific cyclic ether may be but are not limited to 1,3-dioxolane (DOL), 1,4-dioxooxane (DX), crown ether, tetrahydrofuran (THF), 2-methyltetrahydrofuran (2-$CH_3$-THF) and 2-trifluoromethyltetrahydrofuran (2-$CF_3$-THF). Specifically, the chain ether may be but not limited to dimethoxymethane, diethoxymethane, ethoxymethoxymethane, ethylene glycol di-n-propyl ether, ethylene glycol di-n-butyl ether and diethylene glycol dimethyl ether. Dimethoxymethane, diethoxymethane and ethoxymethoxymethane with low viscosity and high ionic conductivity are particularly preferred because the solvability of chain ether and lithium-ions is high and the ion dissociation can be improved. Ether compounds may be used alone or in any combinations and ratios of two or more kinds. The addition amount of ether compound is not particularly limited, which is within the range of not significantly damaging the effect of the high-voltage lithium-ion battery of the present application. In the non-aqueous solvent volume ratio of

100%, the volume ratio is usually 1% or more, preferably 2% or more, more preferably 3% or more. Moreover, the volume ratio is usually 30% or less, preferably 25% or less, and more preferably 20% or less. When two or more ether compounds are used in combination, the total amount of ether compounds only needs to be in the above range. When the addition amount of ether compounds is within the above preferred range, it is easy to ensure the improvement effects of ionic conductivity brought by the increase of lithium-ion dissociation degree and the decrease of viscosity of chain ether. In addition, when the negative electrode active material is a carbon material, the co-intercalation reaction of the chain ether and lithium-ions can be suppressed, so that the input-output characteristics and the charge-discharge rate characteristics can be within an appropriate range.

In some embodiments, the nitrile solvent may be, but is not limited to, one or more of acetonitrile, glutaronitrile and malononitrile.

In some embodiments, the carbonate solvent includes a cyclic carbonate or a chain carbonate. The cyclic carbonate may be but not limited to one or more of ethylene carbonate (EC), propene carbonate (PC), γ-butyrolactone (GBL) and butylene carbonate (BC). The chain carbonate may be but not limited to one or more of dimethyl carbonate (DMC), ethyl methyl carbonate (EMC), diethyl carbonate (DEC) and dipropyl carbonate (DPC). The content of cyclic carbonate is not particularly limited, which is within the range of not significantly damaging the effect of the high-voltage lithium-ion battery of the present application. However, in the case where one is used alone, the minimal content is usually 3% by volume or more, preferably 5% by volume or more, relative to the total amount of the solvent in the non-aqueous electrolyte. With this range, the decrease of conductivity caused by the decrease of the dielectric constant of the non-aqueous electrolyte can be avoided, so the high-current discharge characteristics, the stability with respect to the negative electrode and the cycle characteristics of the non-aqueous electrolyte battery can easily reach a good range. In addition, the maximum content is usually 90% or less by volume, preferably 85% or less by volume, and more preferably 80% or less by volume. With this range, the oxidation/reduction resistance of the non-aqueous electrolyte can be improved, thus contributing to the improvement of the stability during high-temperature storage. The content of the chain carbonate is not particularly limited, but it is usually 15% or more by volume, preferably 20% or more by volume, and more preferably 25% or more by volume, relative to the total amount of the solvent in the non-aqueous electrolyte. In addition, the volume ratio is usually 90% or less, preferably 85% or less, and more preferably 80% or less. By setting the content of the chain carbonate in the above range, the viscosity of the non-aqueous electrolyte can be easily kept with an appropriate range, and the decrease of ionic conductivity can be suppressed, thus contributing to a good range of the output characteristics of the non-aqueous electrolyte battery. When two or more kinds of chain carbonates are used in combination, the total amount of the chain carbonate only needs to be in the above range.

In some embodiments, it is also preferable to use chain carbonates with fluorine atoms (hereinafter referred to as "fluorinated chain carbonates"). The number of fluorine atoms in the fluorinated chain carbonate is not particularly limited as long as it is 1 or more, but it is usually 6 or less, preferably 4 or less. When the fluorinated chain carbonate has multiple fluorine atoms, these fluorine atoms can be bonded to the same carbon or to different carbons. Examples of the fluorinated chain carbonates include fluorinated dimethyl carbonate derivatives, fluorinated ethyl methyl carbonate derivatives and fluorinated diethyl carbonate derivatives.

Carboxylic acid solvent includes cyclic carboxylic ester and/or chain carbonic ester. Examples of cyclic carboxylic ester include one or more of γ-butyrolactone, γ-valerolactone and δ-valerolactone. Examples of chain carbonic ester include one or more of methyl acetate (MA), ethyl acetate (EA), n-propyl acetate (EP), butyl acetate, propyl propionate (PP) and butyl propionate.

In some embodiments, sulfone solvent includes cyclic sulfones and chain sulfones, but preferably, in the case of cyclic sulfones, it is usually a compound with 3-6 carbon atoms, preferably 3-5 carbon atoms; and in the case of chain sulfones, it is usually a compound with 2-6 carbon atoms, preferably 2-5 carbon atoms. The addition amount of the sulfone solvent is not particularly limited, which is within the range of not significantly damaging the effect of the lithium-ion battery of the present application. Compared with the total amount of solvent in non-aqueous electrolyte, the volume ratio is usually 0.3% or more, preferably 0.5% or more, more preferably 1% or more. Moreover, the volume ratio is usually 40% or less, preferably 35% or less, and more preferably 30% or less. When two or more kinds of sulfone solvent are used in combination, the total amount of the sulfone solvents only needs to meet the above range. When the addition amount of sulfone solvent is within the above range, the non-aqueou electrolyte with excellent high-temperature storage stability is easily to be obtained.

In a preferred embodiment, the non-aqueou solvent is a mixture of cyclic carbonic ester and chain carbonic ester.

In some embodiments, the additive further includes at least one of cyclic sulfate compounds, sultone compounds, cyclic carbonate compounds, phosphate compounds, borate compounds and nitrile compounds;

Preferably, the content of the additive is 0.01%-30% based on the total mass of the non-aqueous electrolyte being 100%.

In some embodiments, the cyclic sulfate compound is at least one selected from the group consisting of ethylene sulfate, propylene sulfate, methyl ethylene sulfate,

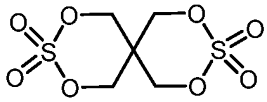

and

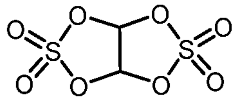

;

the sultone compound is at least one selected from the group consisting of 1,3-propane sultone, 1,4-butane sultone and 1,3- propylene sultone;

the cyclic carbonate compound is selected from at least one of vinylene carbonate, vinylethylene carbonate, methylene ethylene carbonate, fluoroethylene carbonate, trifluoromethyl ethylene carbonate, bis-fluoroethylene carbonate or a compound represented by structural formula 2,

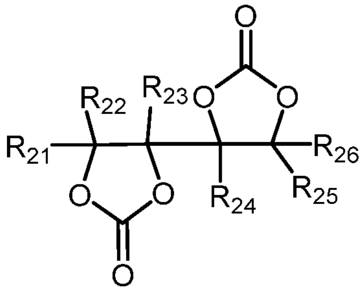

Structural formula 2

in structural formula 2, $R_{21}$, $R_{22}$, $R_{23}$, $R_{24}$, $R_{25}$ and $R_{26}$ are independently selected from one of a hydrogen atom, a halogen atom and a C1-C5 group;

the phosphate compound is selected from at least one of tri (trimethylsilane) phosphate, tri (trimethylsilane) phosphite or a compound represented by structural formula 3:

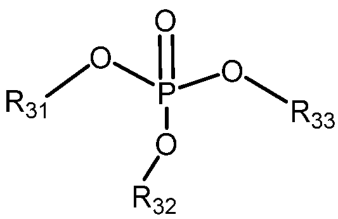

Structural formula 3

in structural formula 3, $R_{31}$, $R_{32}$ and $R_{33}$ are independently selected from a C1-C5 saturated hydrocarbon group, an unsaturated hydrocarbon group, a halogenated hydrocarbon group, $-Si(C_mH_{2m+1})_3$, m is a natural number of 1-3, and at least one of $R_{31}$, $R_{32}$ and $R_{33}$ is an unsaturated hydrocarbon group.

In a preferred embodiment, the phosphate compound represented by structural formula 3 may be at least one selected from the group consisting of phosphoric acid tripropargyl ester, dipropargyl methyl phosphonate, dipropargyl ethyl phosphate, dipropargyl propyl phosphate,dipropargyl trifluoromethyl phosphate, dipropargyl-2, 2, 2-trifluoroethyl phosphate, dipropargyl-3, 3, 3-trifluoropropyl phosphate, dipropargyl hexafluoroisopropyl phosphate, phosphoric acid triallyl ester, diallyl methyl phosphate, diallyl ethyl phosphate, diallyl propyl phosphate, diallyl trifluoromethyl phosphate, diallyl-2 , 2 , 2-trifluoroethyl phosphate, diallyl-3, 3, 3-trifluoropropyl phosphate or diallyl hexafluoroisopropyl phosphate;

the borate compound is selected from at least one of tris (trimethylsilane) borate and tris (triethyl silicane) borate; and the nitrile compound is selected from one or more of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

In other embodiments, the additive may also include other additives that can improve the performance of the battery. For example, additives that can improve the safety performance of the battery, flame retardant additives such as fluorophosphate and cyclophosphazene, or overcharge prevention additives such as tert.-amylbenzene and tert-butyl benzene.

It should be noted that, unless otherwise specified, in general, the content of any optional substance for the additive in the non-aqueous electrolyte is less than 10%, preferably 0.1-5%, and more preferably 0.1%-2%. Specifically, the content of any optional substance fro the additive may be 0.05%, 0.08%, 0.1%, 0.5%, 0.8%, 1%, 1.2%, 1.5%, 1.8%, 2%, 2.2%, 2.5%, 2.8%, 3%, 3.2%, 3.5%, 3.8%, 4%, 4.5%, 5%, 5.5%, 6%, 6.5%, 7%, 7.5%, 7.8%, 8%, 8.5%, 9%, 9.5% and 10%.

In some embodiments, when the additive is selected from fluoroethylene carbonate, the content of the fluoroethylene carbonate is 0.05%-30% based on the total mass of the non-aqueous electrolyte being 100%.

In some embodiments, the lithium-ion battery also includes a separator, which is positioned between the positive electrode and the negative electrode.

The separator is an existing conventional diaphragm, which may be a ceramic diaphragm, a polymer diaphragm, a nonwoven fabric, an inorganic-organic composite diaphragm, etc., including but not limited to single-layer PP (polypropylene), single-layer PE (polyethylene), double-layer PP/PE, double-layer PP/PP, triple-layer PP/PE/PP and other diaphragm.

The separator is an existing conventional diaphragm, which may be a ceramic diaphragm, a polymer diaphragm, a nonwoven fabric, an inorganic-organic composite diaphragm, etc., including but not limited to single-layer PP (polypropylene), single-layer PE (polyethylene), double-layer PP/PE, double-layer PP/PP, triple-layer PP/PE/PP and other diaphragm.

In a preferred embodiment, the separator is a polyolefin or nonwoven porous composite membrane, which includes a substrate diaphragm and a surface coating. The surface coating is inorganic particles or organic gel or a mixture of the two and is coated on at least one side surface of the substrate diaphragm.

The present application will be further illustrated with embodiments and examples.

The compounds mentioned in the following embodiments and comparative examples are shown in the following Table.

Table 1

| | | |
|---|---|---|
| 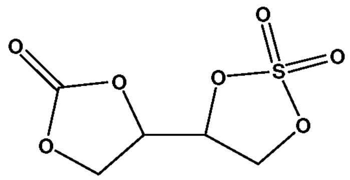 | 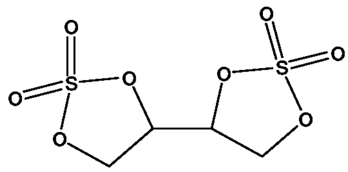 | 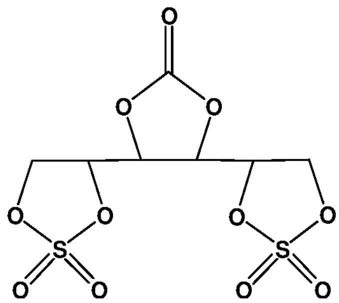 |
| Compound 1 | Compound 4 | Compound 7 |
| 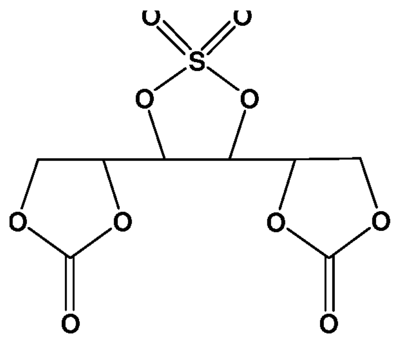 | 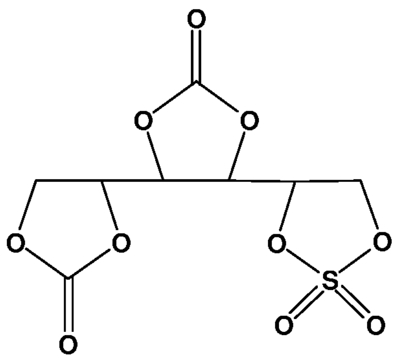 | 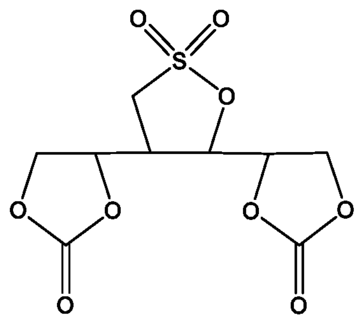 |
| Compound 8 | Compound 10 | Compound 12 |

Table 2 Parameter Design of Embodiments and Comparative examples

| Embodiment /Comparative example | Types of negative electrode active materials | Single-sided surface density (d) of the positive electrode plate (mg/cm$^2$) | Types and molecular weight of binders | Adhesive force (f) between the positive electrode material layer and the positive electrode current (N/m) | Non-aqueous electrolyte | | | m*d/f |
|---|---|---|---|---|---|---|---|---|
| | | | | | Compound represented by structural formula 1 | Content of compound represented by structural formula 1 m/% | Other additives and content /% | |
| Embodiment 1 | Graphite | 20 | Polyvinylidene fluoride: 1.1 million | 10 | Compound 7 | 0.5 | / | 1.00 |
| Embodiment 2 | Graphite | 25 | Polyvinylidene fluoride: 1.0 million | 15 | Compound 7 | 0.1 | / | 0.17 |
| Embodiment 3 | Graphite | 10 | Polyvinylidene fluoride: 1.2 million | 12 | Compound 7 | 0.3 | / | 0.25 |
| Embodiment 4 | Graphite | 40 | Polyvinylidene fluoride: 1.3 million | 8 | Compound 7 | 1 | / | 5.00 |
| Embodiment 5 | Graphite | 15 | Polyvinylidene fluoride: 0.7 million | 5 | Compound 7 | 0.8 | / | 2.40 |
| Embodiment 6 | Graphite | 22 | Polyvinylidene fluoride: 0.8 million | 3 | Compound 7 | 0.6 | / | 4.40 |
| Embodiment 7 | Graphite | 32 | Polyvinylidene fluoride: 0.9 million | 30 | Compound 7 | 3 | / | 3.20 |
| Embodiment 8 | Graphite | 18 | Polyvinylidene fluoride: 0.6 million | 20 | Compound 7 | 1.5 | / | 1.35 |
| Embodiment 9 | Graphite | 38 | polyvinylidene fluoride:95万 | 7 | Compound 7 | 0.01 | / | 0.05 |
| Embodiment 10 | Graphite | 25 | Polyvinylidene fluoride: 0.8 million | 10 | Compound 7 | 1 | / | 2.50 |
| Embodiment 11 | Graphite | 35 | Polyvinylidene fluoride: 0.85 million | 25 | Compound 7 | 2.5 | / | 3.50 |

(continued)

| Embodiment /Comparative example | Types of negative electrode active materials | Single-sided surface density (d) of the positive electrode plate (mg/cm$^2$) | Types and molecular weight of binders | Adhesive force (f) between the positive electrode material layer and the positive electrode current (N/m) | Non-aqueous electrolyte | | | m*d/f |
|---|---|---|---|---|---|---|---|---|
| | | | | | Compound represented by structural formula 1 | Content of compound represented by structural formula 1 m/% | Other additives and content /% | |
| Embodiment 12 | Graphite | 20 | Polyvinylidene fluoride: 0.7 million | 5 | Compound 7 | 0.5 | / | 2.00 |
| Embodiment 13 | Graphite | 20 | Polyvinylidene fluoride: 0.9 million | 8 | Compound 7 | 0.5 | / | 1.25 |
| Embodiment 14 | Graphite | 20 | Polyvinylidene fluoride: 1.3 million | 20 | Compound 7 | 0.5 | / | 0.50 |
| Embodiment 15 | Graphite | 20 | Polyvinylidene fluoride: 1.1 million | 10 | Compound 7 | 0.5 | FEC:5 | 1.00 |
| Embodiment 16 | Graphite | 20 | Polyvinylidene fluoride: 1.1 million | 10 | Compound 7 | 0.5 | HTCN: 2 | 1.00 |
| Embodiment 17 | Graphite | 20 | Polyvinylidene fluoride: 1.1 million | 10 | Compound 7 | 0.5 | LiODFB: 0.5 | 1.00 |
| Embodiment 18 | Graphite | 20 | polytetrafluoro ethylene: 1.0 million | 10 | Compound 7 | 0.5 | / | 1.00 |
| Embodiment 19 | Graphite | 20 | Polymethyl methacrylate: 0.8 million | 10 | Compound 7 | 0.5 | / | 1.00 |
| Embodiment 20 | Graphite | 20 | Polyimide: 0.8 million | 10 | Compound 7 | 0.5 | / | 1.00 |
| Embodiment 21 | Graphite | 20 | Ethylene-propylene-diene terpolymer: 0.9 million | 10 | Compound 7 | 0.5 | / | 1.00 |
| Embodiment 22 | Graphite | 20 | Polyvinyl acetate: 1.1 million | 10 | Compound 7 | 0.5 | / | 1.00 |

(continued)

| Embodiment /Comparative example | Types of negative electrode active materials | Single-sided surface density (d) of the positive electrode plate ($mg/cm^2$) | Types and molecular weight of binders | Adhesive force (f) between the positive electrode material layer and the positive electrode current (N/m) | Non-aqueous electrolyte | | | m*d/f |
|---|---|---|---|---|---|---|---|---|
| | | | | | Compound represented by structural formula 1 | Content of compound represented by structural formula 1 m/% | Other additives and content /% | |
| Embodiment 23 | Graphite | 20 | Styrene butadiene rubber: 0.7 million | 10 | Compound 7 | 0.5 | / | 1.00 |
| Embodiment 24 | Graphite | 20 | Polyvinylidene fluoride: 1.1 million | 10 | Compound 1 | 0.5 | / | 1.00 |
| Embodiment 25 | Graphite | 20 | Polyvinylidene fluoride: 1.1 million | 10 | Compound 4 | 0.5 | / | 1.00 |
| Embodiment 26 | Graphite | 20 | Polyvinylidene fluoride: 1.1 million | 10 | Compound 8 | 0.5 | / | 1.00 |
| Embodiment 27 | Graphite | 20 | Polyvinylidene fluoride: 1.1 million | 10 | Compound 10 | 0.5 | / | 1.00 |
| Embodiment 28 | Graphite | 20 | Polyvinylidene fluoride: 1.1 million | 10 | Compound 12 | 0.5 | / | 1.00 |
| Embodiment 29 | Graphite and $SiO_2$ are mixed in a mass ratio of 9:1 | 20 | Polyvinylidene fluoride: 1.1 million | 10 | Compound 7 | 0.5 | / | 1.00 |
| Embodiment 30 | Graphite and $SiO_2$ are mixed in a mass ratio of 8:2 | 20 | Polyvinylidene fluoride: 1.1 million | 10 | Compound 7 | 0.5 | / | 1.00 |
| Embodiment 31 | Graphite and $SiO_2$ are mixed in a mass ratio of 7:3 | 20 | Polyvinylidene fluoride: 1.1 million | 10 | Compound 7 | 0.5 | / | 1.00 |
| Comparative example 1 | Graphite | 20 | Polyvinylidene fluoride: 1.1 million | 10 | / | / | / | / |

(continued)

| Embodiment /Comparative example | Types of negative electrode active materials | Single-sided surface density (d) of the positive electrode plate (mg/cm$^2$) | Types and molecular weight of binders | Adhesive force (f) between the positive electrode material layer and the positive electrode current (N/m) | Non-aqueous electrolyte | | | m*d/f |
|---|---|---|---|---|---|---|---|---|
| | | | | | Compound represented by structural formula 1 | Content of compound represented by structural formula 1 m/% | Other additives and content /% | |
| Comparative example 2 | Graphite | 20 | Polyvinylidene fluoride: 1.1 million | 10 | / | / | FEC:5 | / |
| Comparative example 3 | Graphite | 20 | Polyvinylidene fluoride: 1.1 million | 10 | / | / | HTCN: 2 | / |
| Comparative example 4 | Graphite | 20 | Polyvinylidene fluoride: 1.1 million | 10 | / | / | LiODFB:0. 5 | / |
| Comparative example 5 | Graphite | 5 | Polyvinylidene fluoride: 1.1 million | 15 | Compound 7 | 0.5 | / | 0.17 |
| Comparative example 6 | Graphite | 45 | Polyvinylidene fluoride: 1.1 million | 18 | Compound 7 | 0.5 | / | 1.25 |
| Comparative example 7 | Graphite | 15 | Polyvinylidene fluoride: 1.1 million | 2 | Compound 7 | 0.5 | / | 3.75 |
| Comparative example 8 | Graphite | 18 | Polyvinylidene fluoride: 1.1 million | 35 | Compound 7 | 0.5 | / | 0.26 |
| Comparative example 9 | Graphite | 38 | Polyvinylidene fluoride: 1.1 million | 5 | Compound 7 | 0.008 | / | 0.06 |
| Comparative example 10 | Graphite and $SiO_2$ are mixed in a mass ratio of 8:2 | 15 | Polyvinylidene fluoride: 1.1 million | 20 | Compound 7 | 3.5 | / | 2.63 |
| Comparative example 11 | Graphite | 30 | Polyvinylidene fluoride: 1.1 million | 10 | Compound 7 | 2 | / | 6.00 |
| Comparative example 12 | Graphite | 15 | Polyvinylidene fluoride: 1.1 million | 25 | Compound 7 | 0.05 | / | 0.03 |

(continued)

| Embodiment /Comparative example | Types of negative electrode active materials | Single-sided surface density (d) of the positive electrode plate ($mg/cm^2$) | Types and molecular weight of binders | Adhesive force (f) between the positive electrode material layer and the positive electrode current (N/m) | Non-aqueous electrolyte | | | m*d/f |
|---|---|---|---|---|---|---|---|---|
| | | | | | Compound represented by structural formula 1 | Content of compound represented by structural formula 1 m/% | Other additives and content /% | |
| Comparative example 13 | Graphite | 12 | Polyvinylidene fluoride: 1.1 million | 30 | Compound 7 | 0.1 | / | 0.04 |
| Comparative example 14 | Graphite | 10 | Polyvinylidene fluoride: 1.1 million | 27 | Compound 7 | 0.06 | / | 0.02 |
| Comparative example 15 | Graphite | 28 | Polyvinylidene fluoride: 1.1 million | 15 | Compound 7 | 3 | / | 5.60 |
| Comparative example 16 | Graphite | 30 | Polyvinylidene fluoride: 1.1 million | 16 | Compound 7 | 4 | / | 7.50 |
| Comparative example 17 | Graphite | 20 | Polyvinylidene fluoride: 1.4 million | 40 | Compound 7 | 0.5 | / | 0.25 |
| Comparative example 18 | Graphite | 20 | Polyvinylidene fluoride: 0.5 million | 2 | Compound 7 | 0.5 | / | 5.00 |

Embodiment 1

This embodiment is used to illustrate the lithium-ion battery and its preparation method, including the following steps:

1) Preparation of electrolyte

Ethylene carbonate (EC), diethyl carbonate (DEC) and ethyl methyl carbonate (EMC) were mixed according to the mass ratio of EC: DEC: EMC = 1: 1: 1, and then lithium hexafluorophosphate ($LiPF_6$) was added until the molar concentration was 1 mol/L, and then compound 7 was added as an additive. The percentage mass content of compound 7 in the non-aqueous electrolyte is shown in Table 2 based on the total mass of the non-aqueous electrolyte being 100%.

2) Preparation of positive electrode plate

The positive electrode active materials of $LiCoO_2$, conductive carbon black Super-P and positive electrode binder were mixed, then they were dispersed in N-methyl-2- pyrrolidone (NMP) to obtain a positive electrode slurry. The aluminum foil was used as a positive electrode current collector. The slurry was evenly coated on both sides of aluminum foil, dried, calendered and vacuum-dried to obtain a positive electrode material layer. A positive electrode plate was obtained by welding aluminum lead wires with an ultrasonic welder. The single-sided surface density of the positive electrode material layer, the option of the positive electrode binder and molecular weight are shown in Table 2.

The adhesive force between the positive electrode material layer and the positive electrode current collector was tested as follows. The adhesive force between the positive electrode plate and the positive electrode current collector can refer to the national standard GB/T2790-1995 adhesive, 180° peel strength test method. In the specific test, the High-speed tensile testing machine can be used to test the 180° peel strength at the peeling speed of 50 mm/min, and the average peeling strength collected when the positive electrode plate with a length of 60 mm is completely peeled from the positive electrode current collector is taken as the adhesive force between the positive electrode plate and the positive electrode current collector. The test results are shown in Table 2.

3) Preparation of negative electrode plate

The negative electrode active materials of artificial Graphite, conductive carbon black Super-P, binder styrene-butadiene rubber (SBR) and carboxymethyl cellulose (CMC) were mixed according to the mass ratio of 94:1:2.5:2.5, , then they were dispersed in deionized water to obtain a negative electrode slurry. The slurry was evenly coated on both sides of copper foil, dried, calendered and vacuum-dried. A negative electrode plate was obtained by welding nickel lead wires with an ultrasonic welder, with a thickness of 120-150 μm.

4) Preparation of battery core

A three-layer separator with a thickness of 20μm was placed between the positive electrode plate and the negative electrode plate. The porosity of the separator was shown in Table 2. The sandwich structure consisting of the positive electrode plate, negative electrode plate and separator was wound, and then the wound body was put into an aluminum foil packaging bag and baked in vacuum at 85°C for 48h to obtain the battery core to be injected with liquid.

5) Injection and formation of battery core

In a glove box with the dew point controlled below -40°C, the prepared non-aqueous electrolyte was injected into the battery core, and then it was packed and sealed in vacuum condition and let stand for 24 hours.

Then, formation of the first charge was performed according to the following steps: charging at 0.1C constant current for 45 min, charging at 0.2C constant current for 30 min, sealing in vaccum condition for the second time, further charging at 0.5C constant current to 4.45V, then charging at constant voltage until the current dropped to 0.02 C. And after standing for 5 min, discharging at constant current at 0.5C to 3.0V to obtain a $LiCoO_2$ / artificial graphite lithium-ion battery.

Embodiments 2-31

Embodiments 2-31 are used to illustrate the lithium-ion battery and preparation method disclosed in the present application, including most of the steps in Embodiment 1, with the following differences:
the negative electrode active materials used in Embodiment 2-31, the single-sided surface density of the positive electrode material layer, the option and molecular weight of the positive electrode binder, the adhesive force between the positive

electrode material layer and the positive electrode current collector, and the types and percentage mass contents of additives in the non-aqueous electrolyte are shown in Table 2.

Comparative examples 1-16

Comparative examples 1-16 are used to illustrate the lithium-ion battery and preparation method disclosed in the present application, including most of the steps in Embodiment 1, with the following differences:
the negative electrode active materials used in Comparative example 1-16, the single-sided surface density of the positive electrode material layer, the option and molecular weight of the positive electrode binder, the adhesive force between the positive electrode material layer and the positive electrode current collector, and the types and percentage mass contents of additives in the non-aqueous electrolyte are shown in Table 2.

Performance test

The following performance tests were conducted on the lithium-ion battery prepared above. Resistivity test of positive electrode:
The resistance R of the positive electrode plate was tested using an internal resistance tester (HIOKI BT3562), including: cutting the positive electrode plate into a test sample with the size of 10 cm×10 cm; clamping the upper and lower sides of the test sample between two conductive terminals of the internal resistance tester, applying a certain pressure to fix it, and testing the resistance R of the positive electrode plate. The diameter of the conductive terminal is 14 mm (the cross-sectional area is 153.94mm$^2$), the applied pressure is 15MPa-27MPa, and the sampling time ranges from 5 s to 17 s. Each group consists of 4 positive electrode plate samples. After testing the resistance values of 10 sampling times for each sample, the average value is taken as the resistance value R of the group of positive electrode plates. The resistivity of the positive electrode plate is calculated according to $\rho$ = RS/L, where S is the area of the positive electrode plate and L is the thickness of the positive electrode plate.

Battery cycle performance test:

At 25°C, the lithium-ion batteries prepared from Embodiments and Comparative examples were charged at 1C rate and discharged at 1C rate, and the initial charge/discharge capacities of the battery were recorded. The full-charge and full-discharge cycle test was performed at the cut-off voltage of 3V-4.45V until the capacity of the lithium-ion battery decayed to 80% of the initial capacity, and the number of cycles was recorded.

(1) Test results obtained from Embodiments 1-11 and Comparative examples 1-16 are shown in Table 3.

Table 3

| Embodiment /Comparative example | Initial capacity of battery (mAh) | Positive electrode resistivity (Ω·cm) | Number of cycles at 25°C |
|---|---|---|---|
| Embodiment 1 | 1165 | 254 | 1010 |
| Embodiment 2 | 1172 | 445 | 967 |
| Embodiment 3 | 1150 | 381 | 975 |
| Embodiment 4 | 1200 | 921 | 892 |
| Embodiment 5 | 1156 | 312 | 988 |
| Embodiment 6 | 1168 | 712 | 907 |
| Embodiment 7 | 1182 | 514 | 924 |
| Embodiment 8 | 1161 | 286 | 994 |
| Embodiment 9 | 1193 | 855 | 900 |
| Embodiment 10 | 1176 | 355 | 982 |
| Embodiment 11 | 1189 | 601 | 915 |
| Comparative example 1 | 1141 | 1382 | 645 |
| Comparative example 2 | 1155 | 1265 | 692 |

(continued)

| Embodiment /Comparative example | Initial capacity of battery (mAh) | Positive electrode resistivity (Ω·cm) | Number of cycles at 25°C |
|---|---|---|---|
| Comparative example 3 | 1150 | 1298 | 684 |
| Comparative example 4 | 1146 | 1323 | 675 |
| Comparative example 5 | 1145 | 1126 | 758 |
| Comparative example 6 | 1205 | 1178 | 742 |
| Comparative example 7 | 1147 | 1201 | 724 |
| Comparative example 8 | 1153 | 1234 | 712 |
| Comparative example 9 | 1190 | 1254 | 702 |
| Comparative example 10 | 1172 | 1276 | 686 |
| Comparative example 11 | 1175 | 1052 | 792 |
| Comparative example 12 | 1152 | 1168 | 753 |
| Comparative example 13 | 1147 | 1122 | 762 |
| Comparative example 14 | 1144 | 1196 | 748 |
| Comparative example 15 | 1170 | 1032 | 804 |
| Comparative example 16 | 1170 | 1078 | 775 |

According to the test results of Embodiments 1-11 and Comparative examples 1-16, it can be seen that by adopting lithium cobalt oxide as the positive electrode active material, adding the compound represented by structural formula 1 to the non-aqueous electrolyte, and enabling the single-sided surface density (d) of the positive electrode material layer, the adhesive force (f) between the positive electrode material layer and the positive electrode current collector, and the percentage mass content (m) of the compound represented by structural formula 1 in the non-aqueous electrolyte to satisfy the conditions of $0.05 \le m*d/f \le 5$, and $10 \le d \le 40$, $3 \le f \le 30$, $0.01 \le m \le 3$, the obtained lithium-ion battery has higher initial capacity, lower resistivity and better cycle performance. It is speculated that the positive electrode has a high energy density under the condition of single-sided surface density of the positive electrode material layer, and the compound represented by structural formula 1 forms a stable and thin interface film on the surface of the positive electrode material layer. The interface film is beneficial to the conduction and diffusion of lithium-ions, and the adhesive force between the positive electrode material layer and the positive electrode current collector ensures the excellent electronic conductivity of the positive electrode, which can effectively ensure the ionic conductivity and electronic conductivity of the positive electrode. In this way, the positive electrode has good dynamic performance, which can further ensure that the battery has good dynamic performance and cycle performance without compromising energy density.

According to the test results of Embodiment 1-11, when the single-sided surface density (d) of the positive electrode material layer, the adhesive force (f) between the positive electrode material layer and the positive electrode current collector, and the percentage mass content (m) of the compound represented by structural formula 1 in the non-aqueous electrolyte further satisfy the condition $0.1 \le m*d/f \le 3$, it is beneficial to further reduce the resistivity of positive electrode and prolong the cycle life of lithium-ion battery. It is speculated that the interface film formed by the compound represented by structural formula 1 can cover the surface of the positive electrode material layer more evenly under this condition. Moreover, the contact resistance between the positive electrode material layer and the positive electrode current collector is low, thus ensuring the ion conductivity and electron conductivity and improving the cycle performance of lithium-ion battery.

According to the test results of Comparative examples 1-16, if the single-sided surface density (d) of the positive electrode material layer, the adhesive force (f) between the positive electrode material layer and the positive electrode current collector, and the percentage mass content (m) of the compound represented by structural formula 1 in the non-aqueous electrolyte satisfy the condition of $0.05 \le m*d/f \le 5$, while the value of d, f or m does not fall within the range, the lithium-ion battery still does not have high initial capacity and cycle performance. This indicates that the values of d, f and m have a strong correlation in improving the performance of lithium-ion batteries. Similarly, if the values of d, f and m are within the range, while the value of m*d/f does not meet the above preset conditions, the improvement of battery performance is still not obvious.

(2) The test results obtained from Embodiment 1, Embodiments 12-14 and Comparative examples 17-18 are shown in Table 4.

Table 4

| Embodiment /Comparative example | Initial capacity of battery (mAh) | Positive electrode resistivity (Ω·cm) | Number of cycles at 25°C |
|---|---|---|---|
| Embodiment 1 | 1165 | 254 | 1010 |
| Embodiment 12 | 1178 | 325 | 996 |
| Embodiment 13 | 1172 | 274 | 1005 |
| Embodiment 14 | 1158 | 303 | 1000 |
| Comparative example 17 | 1162 | 368 | 821 |
| Comparative example 18 | 1158 | 392 | 813 |

According to the test results of Embodiment 1, Embodiments 12-14 and Comparative examples 17-18, it can be seen in the battery system provided by the present application, when other influencing factors are consistent, with the increase of the molecular weight of the organic polymer used as the positive electrode binder, the resistivity of the positive electrode first decreases and then increases, and the cycle life of the lithium-ion battery first increases and then decreases. Especially, when the molecular weight of the organic polymer is 0.6-1.3 million, the lithium-ion battery has lower impedance and higher cycle life. This indicates that under the conditions defined by the present application, the option of molecular weight of organic polymer can further affect the battery performance. By selecting the positive electrode binder with an appropriate molecular weight, it is beneficial to reduce the battery impedance and prolong the battery life.

(3) The test results obtained from Embodiment 1 and Embodiments 15-17 are shown in Table 5.

Table 5

| Embodiment /Comparative example | Initial capacity of battery (mAh) | Positive electrode resistivity (Ω·cm) | Number of cycles at 25°C |
|---|---|---|---|
| Embodiment 1 | 1165 | 254 | 1010 |
| Embodiment 15 | 1179 | 134 | 1026 |
| Embodiment 16 | 1174 | 185 | 1020 |
| Embodiment 17 | 1170 | 231 | 1015 |

According to the test results of Embodiment 1 and Embodiments 15-17, it can be seen that by adding fluoroethylene carbonate (FEC), 1,3,6-Hexanetricarbonitrile (HTCN) or lithium difluoroacetate borate (LiODFB) to the battery system provided by the present application, the resistivity of the positive electrode can be further reduced and the cycle life can be prolonged. This indicates that the mechanism of improving battery performance by other additives is different from that of the compound represented by structural formula 1, and they have complementary effects on the film formation, thus improving the quality of the interface film on the surface of the positive electrode material layer.

(4) The test results obtained from Embodiment 1 and Embodiments 18-23 are shown in Table 6.

Table 6

| Embodiment /Comparative example | Initial capacity of battery (mAh) | Positive electrode resistivity (Ω·cm) | Number of cycles at 25°C |
|---|---|---|---|
| Embodiment 1 | 1165 | 254 | 1010 |
| Embodiment 18 | 1160 | 274 | 999 |
| Embodiment 19 | 1156 | 293 | 993 |
| Embodiment 20 | 1152 | 333 | 985 |
| Embodiment 21 | 1147 | 367 | 973 |
| Embodiment 22 | 1161 | 268 | 1002 |
| Embodiment 23 | 1150 | 348 | 978 |

According to the test results of Embodiment 1 and Embodiments 18-23, it can be seen when different types of

organic polymers are used as the positive electrode binder, the adhesive force (f) between the positive electrode material layer and the positive electrode current would be affected to a certain level. However, for the purpose of enabling the value of m*d/f to meet the design conditions of the present application, when adjusting other variables, such as single-sided surface density (d) of the positive electrode material layer and the percentage mass content (m) of the compound represented by structural formula 1 in the non-aqueous electrolyte, a lithium-ion battery with better performance can also be obtained. This indicates that the battery system provided by the present application is suitable for different positive electrode binders.

(5) The test results obtained from Embodiment 1 and Embodiments 24-28 are shown in Table 7.

Table 7

| Embodiment /Comparative example | Initial capacity of battery (mAh) | Positive electrode resistivity (Ω·cm) | Number of cycles at 25°C |
|---|---|---|---|
| Embodiment 1 | 1165 | 254 | 1010 |
| Embodiment 24 | 1163 | 259 | 1007 |
| Embodiment 25 | 1161 | 263 | 1004 |
| Embodiment 26 | 1155 | 276 | 995 |
| Embodiment 27 | 1157 | 273 | 998 |
| Embodiment 28 | 1159 | 270 | 1001 |

According to the test results of Embodiment 1 and Embodiments 24-28, for different compounds represented by structural formula 1, when the single-sided surface density (d) of the positive electrode material layer, the adhesive force (f) between the positive electrode material layer and the positive electrode current collector, and the percentage mass content (m) of the compound represented by structural formula 1 in the non-aqueous electrolyte meet the preset condition of $0.05 \leq m*d/f \leq 5$, it plays a similar role, which has a good effect on alleviating the problems of capacity attenuation and insufficient dynamic performance of lithium-ion batteries. This indicates that the relationship proposed by the present application is suitable for different compounds represented by structural formula 1.

(6) The test results obtained from Embodiment 1, Embodiments 29-31 and Comparative example 10 are shown in Table 8.

Table 8

| Embodiment /Comparative example | Initial capacity of battery (mAh) | Positive electrode resistivity (Ω·cm) | Number of cycles at 25°C |
|---|---|---|---|
| Embodiment 1 | 1165 | 254 | 1010 |
| Embodiment 29 | 1188 | 271 | 882 |
| Embodiment 30 | 1210 | 298 | 858 |
| Embodiment 31 | 1254 | 327 | 840 |
| Comparative example 10 | 1172 | 1276 | 686 |

According to the test results of Embodiment 1, Embodiments 29-31 and Comparative example 10, when the negative electrode active material is mixed with graphite and silicon oxide in different mass ratios, and the relationship of the present application of $0.05 \leq m*d/f \leq 5$ is satisfied, it can also effectively improve the number of cycles of lithium-ion batteries. This indicates that the system defined by the present application mainly improves the positive electrode of lithium-ion. Therefore, the definition of the relational relationship is also applicable to different negative electrode materials and their combinations.

The above are merely the preferred embodiments of this application, and are not intended to limit the application. Any modification, equivalent substitution and improvement made within the spirit and principle of this application shall be included in the protection scope of this application.

## Claims

**1.** A lithium-ion battery, comprising a positive electrode, a negative electrode and a non-aqueous electrolyte, wherein the positive electrode comprises a positive electrode current collector and a positive electrode material layer arranged on the positive electrode current collector, and the positive electrode material layer comprises a positive electrode active material containing a lithium cobalt oxide, and the positive electrode has a resistivity less than or equal to 1000 $\Omega\cdot$cm;

the non-aqueous electrolyte comprises a non-aqueous organic solvent, a lithium salt and an additive, wherein the additive comprises a compound represented by structural formula 1:

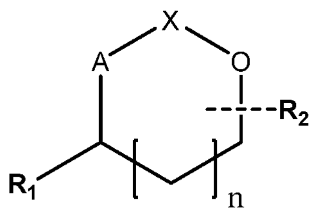

Structural formula 1

wherein n is 0 or 1, A is selected from C or O, X is selected from

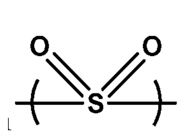 or 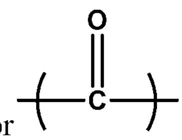,

$R_1$ and $R_2$ are independently selected from H,

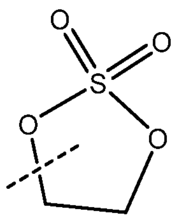, 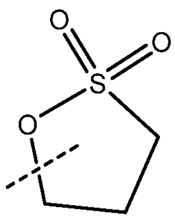, 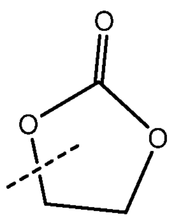,

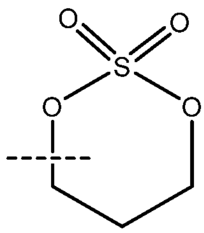 or 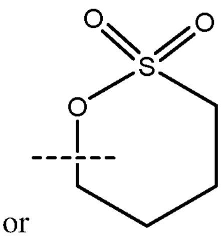,

$R_1$ and $R_2$ are not selected from H at the same time, and X, $R_1$ and $R_2$ contain at least one sulfur atom;
the lithium-ion battery meets the following requirements:

$$0.05 \leq m*d/f \leq 5, \text{ and } 10 \leq d \leq 40,\ 3 \leq f \leq 30,\ 0.01 \leq m \leq 3;$$

wherein d is a single-sided surface density of the positive electrode material layer, in mg/cm$^2$;
f is an adhesive force between the positive electrode material layer and the positive electrode current collector, in N/m; and
m is a percentage mass content of the compound represented by structural formula 1 in the non-aqueous electrolyte, in %.

**2.** The lithium-ion battery of claim 1, wherein the lithium-ion battery meets the following

$$0.1 \leq m*d/f \leq 3.$$

requirements:

**3.** The lithium-ion battery of claim 1, wherein the positive electrode has a resistivity of 30-500 Ω·cm.

**4.** The lithium-ion battery of claim 1, wherein the single-sided surface density (d) of the positive electrode material layer is 15-30mg/cm$^2$.

**5.** The lithium-ion battery of claim 1, wherein the adhesive force (f) between the positive electrode material layer and the positive electrode current collector is 5-20 N/m.

**6.** The lithium-ion battery of claim 1, wherein the percentage mass content (m) of the compound represented by structural formula 1 in the non-aqueous electrolyte is 0.1%-1.5%.

**7.** The lithium-ion battery of claim 1, wherein the compound represented by structural formula 1 is selected from one or more of the following compounds:

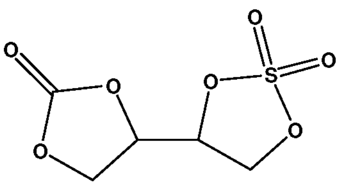
Compound 1

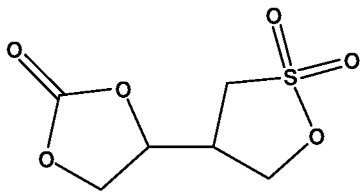
Compound 2

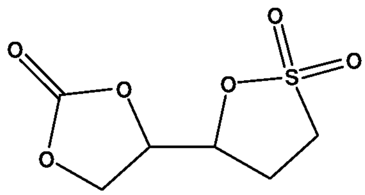
Compound 3

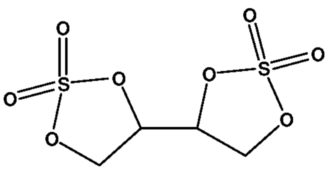
Compound 4

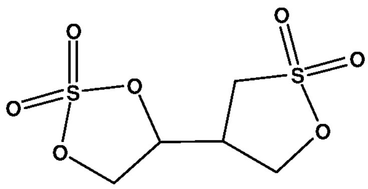
Compound 5

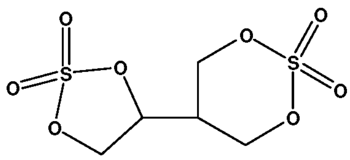
Compound 6

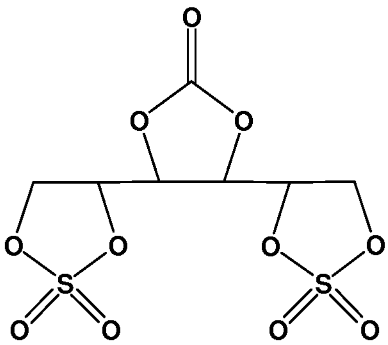
Compound 7

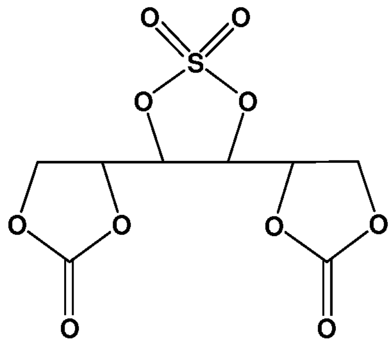
Compound 8

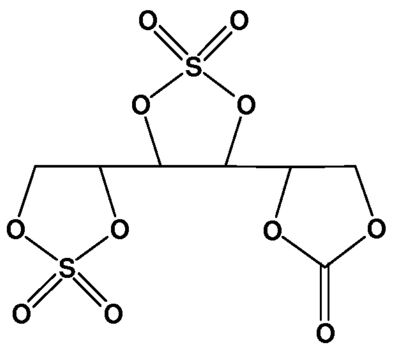

Compound 9

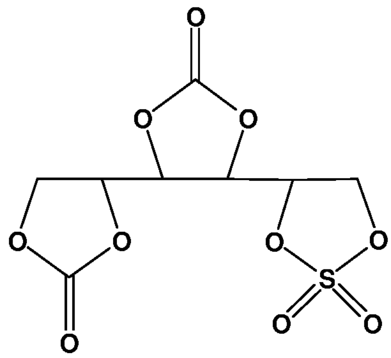

Compound 10

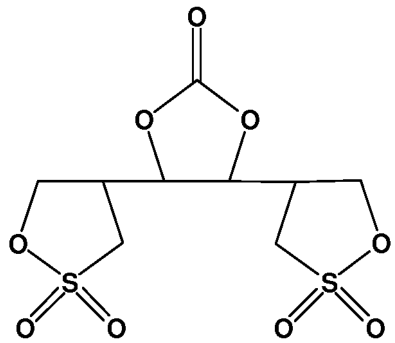

Compound 11

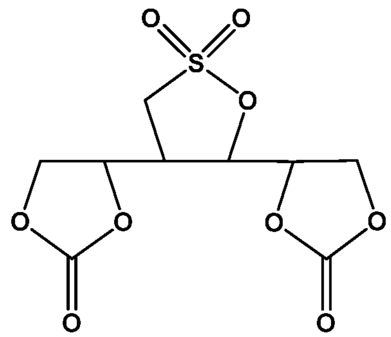

Compound 12

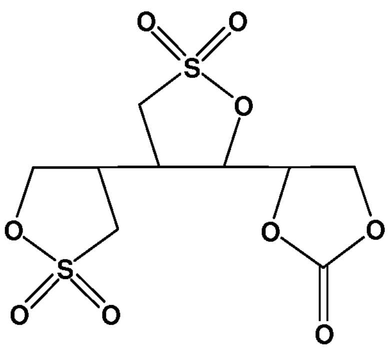

Compound 13

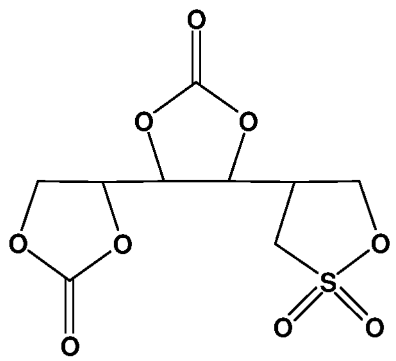

Compound 14

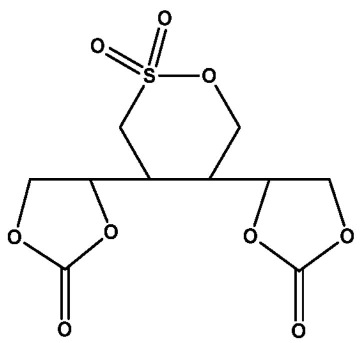

Compound 15

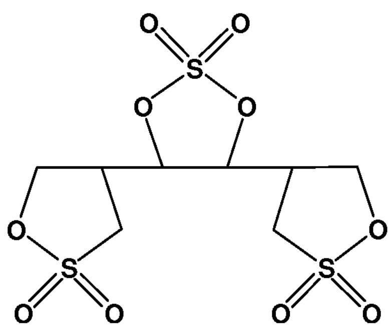

Compound 16

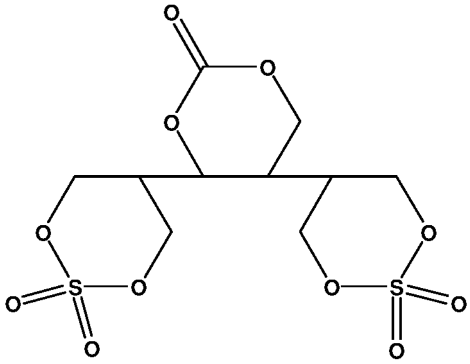

Compound 17

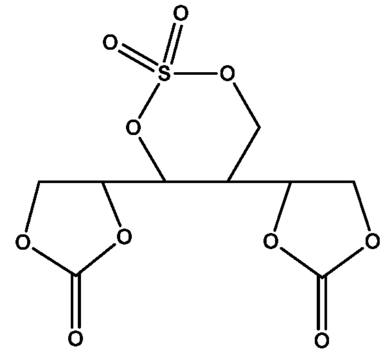

Compound 18

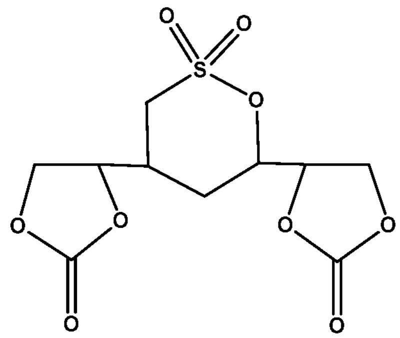

Compound 19

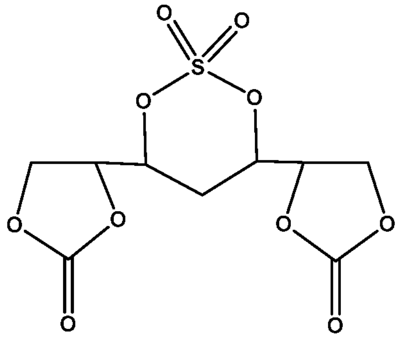

Compound 20

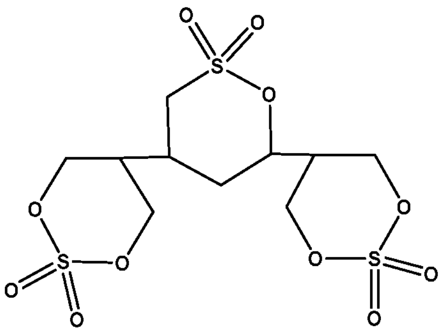

Compound 21

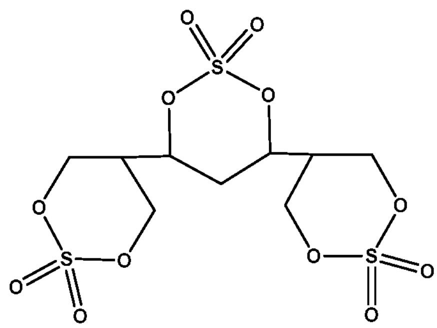

Compound 22.

8. The lithium-ion battery of claim 1, wherein the positive electrode material layer further comprises a positive electrode binder, and the positive electrode binder comprises an organic polymer with a molecular weight of 0.6-1.3 million.

9. The lithium-ion battery of claim 1, wherein the additive further comprises at least one of cyclic sulfate compounds, sultone compounds, cyclic carbonate compounds, phosphate compounds, borate compounds and nitrile compounds;
the content of the additive is 0.01%-30% based on the total mass of the non-aqueous electrolyte being 100%.

10. The lithium-ion battery of claim 9, wherein the cyclic sulfate compound is at least one selected from the group consisting of ethylene sulfate, propylene sulfate, methyl ethylene sulfate,

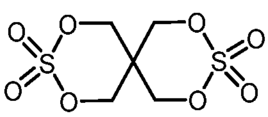 and 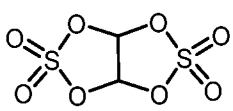 ;

the sultone compound is at least one selected from the group consisting of 1,3-propane sultone, 1,4-butane sultone and 1,3- propylene sultone;
the cyclic carbonate compound is selected from at least one of vinylene carbonate, vinylethylene carbonate, methylene ethylene carbonate, fluoroethylene carbonate, trifluoromethyl ethylene carbonate, bis-fluoroethylene carbonate or a compound represented by structural formula 2,

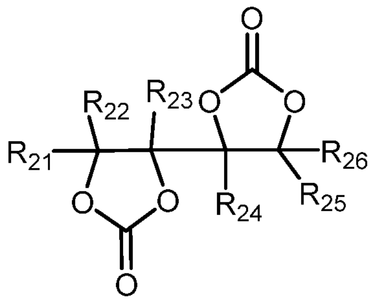

Structural formula 2

in structural formula 2, $R_{21}$, $R_{22}$, $R_{23}$, $R_{24}$, $R_{25}$ and $R_{26}$ are independently selected from one of a hydrogen atom, a halogen atom and a C1-C5 group;
the phosphate compound is selected from at least one of tri (trimethylsilane) phosphate, tri (trimethylsilane) phosphite or a compound represented by structural formula 3:

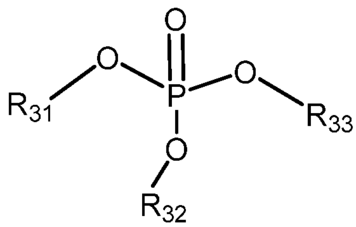

Structural formula 3

in structural formula 3, $R_{31}$, $R_{32}$ and $R_{33}$ are independently selected from a C1-C5 saturated hydrocarbon group, an unsaturated hydrocarbon group, a halogenated hydrocarbon group, $-Si(C_mH_{2m+1})_3$, m is a natural number of 1-3, and at least one of $R_{31}$, $R_{32}$ and $R_{33}$ is an unsaturated hydrocarbon group;
the borate compound is selected from at least one of tris (trimethylsilane) borate and tris (triethyl silicane) borate; and
the nitrile compound is selected from one or more of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

**INTERNATIONAL SEARCH REPORT**

International application No.
**PCT/CN2023/102546**

**A. CLASSIFICATION OF SUBJECT MATTER**

H01M10/0567(2010.01)i；H01M10/0525(2010.01)i

According to International Patent Classification (IPC) or to both national classification and IPC

**B. FIELDS SEARCHED**

Minimum documentation searched (classification system followed by classification symbols)

IPC：H01M10/-

Documentation searched other than minimum documentation to the extent that such documents are included in the fields searched

Electronic data base consulted during the international search (name of data base and, where practicable, search terms used)

CNTXT, DWPI, ENTXTC, CJFD, WFNPL, ISI Web of Science: 新宙邦, 钱韫娴, 胡时光, 李红梅, 向晓霞, 锂电池, 锂离子电池, 正极, 阳极, anode, 负极, 阴极, cathode, 非水电解液, electrolyte, 钴酸锂, liCoO2, 添加剂, 电阻率, 面密度, 粘结力, lithium battery, lithium cell, li-ion battery, lithium-ion battery

**C. DOCUMENTS CONSIDERED TO BE RELEVANT**

| Category* | Citation of document, with indication, where appropriate, of the relevant passages | Relevant to claim No. |
|---|---|---|
| PX | CN 115020815 A (SHENZHEN CAPCHEM TECHNOLOGY CO., LTD.) 06 September 2022 (2022-09-06)<br>claims 1-10, and description, paragraphs 5-15, and embodiments 1-31 | 1-16 |
| A | CN 114464887 A (SHENZHEN CAPCHEM TECHNOLOGY CO., LTD.) 10 May 2022 (2022-05-10)<br>claims 1-10, and description, paragraphs 6-43, and embodiments 1-31 | 1-16 |
| A | CN 113224262 A (ZHUHAI COSMX BATTERY CO., LTD.) 06 August 2021 (2021-08-06)<br>claims 1-10, and description, paragraphs 5-28, and embodiments 1-6 | 1-16 |
| A | CN 114068936 A (SHENZHEN CAPCHEM TECHNOLOGY CO., LTD.) 18 February 2022 (2022-02-18)<br>claims 1-15, and description, paragraphs 6-16, and embodiments 1-40 | 1-16 |
| A | CN 114094109 A (SHENZHEN CAPCHEM TECHNOLOGY CO., LTD.) 25 February 2022 (2022-02-25)<br>claims 1-11, and description, paragraphs 5-15, and embodiments 1-49 | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 August 2023** | **21 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**

International application No.
**PCT/CN2023/102546**

**C. DOCUMENTS CONSIDERED TO BE RELEVANT**

| Category* | Citation of document, with indication, where appropriate, of the relevant passages | Relevant to claim No. |
|---|---|---|
| A | JP 2001102091 A (TOSHIBA CORP.) 13 April 2001 (2001-04-13) claims 1-23, and description, paragraphs 20-122, and embodiments 1-20 | 1-16 |
| A | JP 2004047479 A (TOSHIBA CORP.) 12 February 2004 (2004-02-12) claims 1-14, and description, paragraphs 20-253, and embodiments 1-21 | 1-16 |
| A | JP 2006107750 A (DAINIPPON PRINTING CO., LTD.) 20 April 2006 (2006-04-20) claims 1-9, and description, paragraphs 26-71, and embodiments 1-4 | 1-16 |
| A | JP 2006107753 A (DAINIPPON PRINTING CO., LTD.) 20 April 2006 (2006-04-20) claims 1-11, and description, paragraphs 26-71, and embodiments 1-7 | 1-16 |
| A | WO 2014132935 A1 (ZEON CORP.) 04 September 2014 (2014-09-04) claims 1-8, and description, paragraphs 10-142, and embodiments 1-14 | 1-16 |

Form PCT/ISA/210 (second sheet) (July 2022)

**INTERNATIONAL SEARCH REPORT**
**Information on patent family members**

International application No.
**PCT/CN2023/102546**

| Patent document cited in search report | | | Publication date (day/month/year) | Patent family member(s) | | | Publication date (day/month/year) |
|---|---|---|---|---|---|---|---|
| CN | 115020815 | A | 06 September 2022 | None | | | |
| CN | 114464887 | A | 10 May 2022 | None | | | |
| CN | 113224262 | A | 06 August 2021 | None | | | |
| CN | 114068936 | A | 18 February 2022 | None | | | |
| CN | 114094109 | A | 25 February 2022 | None | | | |
| JP | 2001102091 | A | 13 April 2001 | JP | 3643522 | B2 | 27 April 2005 |
| JP | 2004047479 | A | 12 February 2004 | JP | 4031407 | B2 | 09 January 2008 |
| JP | 2006107750 | A | 20 April 2006 | JP | 4834975 | B2 | 14 December 2011 |
| JP | 2006107753 | A | 20 April 2006 | None | | | |
| WO | 2014132935 | A1 | 04 September 2014 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 27901995 T